(19) Europäisches Patentamt
European Patent Office
Office européen des brevets

(11) **EP 3 473 959 B1**

(12) **EUROPÄISCHE PATENTSCHRIFT**

(45) Veröffentlichungstag und Bekanntmachung des Hinweises auf die Patenterteilung:
**12.02.2020   Patentblatt 2020/07**

(51) Int Cl.:
***F26B 5/06*** *(2006.01)*

(21) Anmeldenummer: **17197514.7**

(22) Anmeldetag: **20.10.2017**

(54) **VERFAHREN ZUR DRUCKBASIERTEN ERMITTLUNG EINES PRODUKTPARAMETERS IN EINEM GEFRIERTROCKNER, GEFRIERTROCKNER UND SOFTWAREPRODUKT**

FREEZE-DRYER, SOFTWARE PRODUCT AND METHOD FOR PRESSURE-BASED DETERMINATION OF A PRODUCT PARAMETER IN A FREEZE-DRYER.

PROCÉDÉ DE DÉTERMINATION BASÉ SUR LA PRESSION D'UN PARAMÈTRE DE PRODUIT DANS UN CONGÉLATEUR, CONGÉLATEUR ET PRODUIT LOGICIEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.04.2019   Patentblatt 2019/17**

(73) Patentinhaber: **Martin Christ Gefriertrocknungsanlagen GmbH 37520 Osterode am Harz (DE)**

(72) Erfinder:
 • **HARMS, Frank 37520 Osterode am Harz (DE)**
 • **EBERT, Michael 37520 Osterode am Harz (DE)**
 • **OSTERMEIER, Sven 37539 Bad Grund (DE)**

(74) Vertreter: **REHBERG HÜPPE + PARTNER Patentanwälte PartG mbB Robert-Gernhardt-Platz 1 37073 Göttingen (DE)**

(56) Entgegenhaltungen:
**EP-B1- 2 156 124        DE-B- 1 038 988 US-A1- 2008 172 902**

 • **XIAOLIN (CHARLIE) TANG ET AL: "Freeze-Drying Process Design by Manometric Temperature Measurement: Design of a Smart Freeze-Dryer", PHARMACEUTICAL RESEARCH, KLUWER ACADEMIC PUBLISHERS-PLENUM PUBLISHERS, NL, Bd. 22, Nr. 4, 1. April 2005 (2005-04-01), Seiten 685-700, XP019370834, ISSN: 1573-904X, DOI: 10.1007/S11095-005-2501-2**

EP 3 473 959 B1

**Beschreibung**

## TECHNISCHES GEBIET DER ERFINDUNG

Die Erfindung betrifft ein Verfahren zur druckbasierten Ermittlung eines Produktparameters in einem Gefriertrockner. Des Weiteren betrifft die Erfindung einen Gefriertrockner sowie ein Softwareprodukt, bei welchem es sich bspw. um ein maschinenlesbares Speichermedium, einen portablen Datenträger, eine Festplatte oder eine Datenbank handeln kann.

## STAND DER TECHNIK

Bei einer Gefriertrocknung mit herkömmlichen Gefriertrocknern ist die Produkttemperatur, insbesondere die Temperatur des Trocknungsguts im Bereich einer Sublimationsfront des Trocknungsguts während der Haupttrocknung und/oder während einer Nachtrocknung, ein wichtiger Parameter zur Steuerung und Bewertung des Gefriertrocknungsprozesses.

Üblicherweise kommen zur Messung der Produkttemperatur Temperatursensoren zum Einsatz. Bekannte Temperatursensoren werden drahtlos oder drahtgebunden mit Energie versorgt und übertragen das Messsignal drahtlos oder drahtgebunden. Diese Temperatursensoren können in einigen Trocknungsgefäßen in einer Trocknungskammer des Gefriertrockner angeordnet werden, womit in diesen Trocknungsgefäßen selektiv (und möglichst repräsentativ für sämtliche in der Trocknungskammer angeordnete Trocknungsgefäße) einzelne Temperaturen gemessen werden können. In den Trocknungsgefäßen verfälschen aber u. U. die Temperatursensoren bereits die Prozessbedingungen gegenüber den Trocknungsgefäßen, in welchen kein Temperatursensor angeordnet ist. Infolge der Anwesenheit des Sensors kann es z. B. in dem Trocknungsgefäß zu einem geänderten Kristallisationsverhalten kommen. Darüber hinaus messen die Temperatursensoren die Temperatur in dem Trocknungsgefäß an einer spezifischen Messstelle, welche je nach Anordnung des Temperatursensors und/oder Fortschritt des Trocknungsprozesses im Bereich des gefrorenen Trocknungsguts oder im Bereich eines bereits getrockneten so genannten Kuchens des Trocknungsguts angeordnet sein kann, womit der Temperatursensor nicht exakt die Temperatur an der Sublimationsfront misst. Bei Einsatz des Temperatursensors in dem Trocknungsgefäß ist aber dafür Sorge zu tragen, dass die gemessene Temperatur repräsentativ für den Trocknungsprozess ist, was nur eingeschränkt möglich ist. Grund hierfür ist, dass Temperaturen des Trocknungsguts in unterschiedlichen Trocknungsgefäßen eines Batches unterschiedlich sein können, wobei beispielsweise die Temperatur davon abhängig sein kann, ob ein Trocknungsgefäß weiter innen oder weiter außen in einer Trocknungskammer des Gefriertrockners angeordnet ist.

Alternativ ist eine indirekte Messung der Produkttemperatur über einen Druck in der Trocknungskammer bekannt. Hierzu wird während des Trocknungsprozesses ein Ventil zwischen der Trocknungskammer und einer Eiskammer geschlossen, womit im Idealfall die Trocknungskammer ein geschlossenes System bildet. Trotz der Schließung des Ventils schreitet die Sublimation voran. Da der sublimierte Dampf infolge des geschlossenen Systems weder von dem Eiskondensator aufgenommen wird noch anderweitig beseitigt wird, steigt der Druck in der Trocknungskammer an. Aus dem Druckanstieg in der Trocknungskammer kann auf die Produkttemperatur an der Sublimationsfront rückgeschlossen werden.

Eine druckbasierte indirekte Ermittlung der Produkttemperatur wurde in der Patentschrift DE 1 038 988 B vorgeschlagen. In der Patentschrift werden zunächst die zwei Trocknungsphasen eines Gefriertrocknungsprozesses erläutert: In der so genannten Haupttrocknung sublimiert das in dem Trocknungsgut vorhandene Eis, wobei mit fortschreitender Trocknung ein immer größer werdender getrockneter Teilbereich (so genannter Kuchen) den kleiner werdenden Eiskern abdeckt. Ist das Eis vollständig sublimiert, ist die Haupttrocknung beendet, und es schließt eine Nachtrocknung an. In der Nachtrocknung führt eine Entfernung des adsorptiv gebundenen Lösungsmittels zu der angestrebten weiter reduzierten Restfeuchtigkeit, die beispielsweise durch die erstrebte Haltbarkeit des Trocknungsguts vorgegeben sein kann und/oder von der Art des Trocknungsguts abhängig sein kann. Die Patentschrift beschreibt dann, dass für ein gutes Ergebnis des Gefriertrocknungsprozesses die Einhaltung vorbestimmter Temperaturgrenzen wichtig ist: Während der Haupttrocknung soll die Temperatur des Eiskerns einen bestimmten, meist deutlich unter 0° C liegenden Wert nicht überschreiten, da ansonsten die nach der Trocknung angestrebten Eigenschaften des Trocknungsguts nicht gewährleistet werden können. Die Patentschrift beschreibt vor diesem Hintergrund den Zielkonflikt, dass einerseits aus dem zuvor genannten Grund eine möglichst niedrige Temperatur gewählt werden sollte, während andererseits infolge der physikalischen Gesetzmäßigkeiten der Gefriertrocknungsprozess schneller durchgeführt werden kann, je höher die Temperatur des Trocknungsguts ist und je größer die temperaturabhängige Dampfdruckdifferenz zwischen dem Trocknungsgut und der Oberfläche des Eiskondensators ist. Für die optimierte Lösung des Zielkonflikts ist somit eine möglichst große Druckdifferenz zwischen dem Trocknungsgut und der Eiskondensatoroberfläche herbeizuführen, was bedeutet, dass das Trocknungsgut möglichst dicht an der zulässigen Temperaturgrenze gehalten werden muss, bei der sein noch in Eis eingebetteter innerer Kern keine Schädigung erfährt. Die Patentschrift DE 1 038 988 B schlägt vor diesem Hintergrund vor, während der Haupttrocknung die Trocknungskammer durch ein Absperrorgan wiederholt für eine vorbestimmte Zeitdauer, vorzugsweise im Bereich von 2 bis 10 sec, weitgehend oder mindestens zu 90 % hinsichtlich des Wasserdampfstromes abzusperren. Am Ende der Absperrzeit wird der Druck in der Kammer, der dann nahezu gleich dem Sättigungsdampfdruck des in dem Trocknungsgut eingeschlossenen Eises sein soll, gemessen. Aufgrund der aus der Druckmessung mit Hilfe der bekannten Dampfdruckkurve über Eis ermittelten Temperatur des Eises kann dann eine Steuerung der Temperatur während des Gefriertrocknungsprozesses so erfolgen, dass möglichst die Produkttemperatur die zulässige Grenze, bei der der noch in Eis eingeschlossene Kern des Trocknungsguts keine Schädigung erfährt, nicht überschreitet. Ein Übergang von der Haupttrocknung zur Nachtrocknung soll dann erkannt werden, wenn die Messung des Drucks ergibt, dass nach der Absperrung der gemessene Sättigungsdampfdruck annähernd konstant bleibt. Während der Nachtrocknung kann dann nach einer längeren vorbestimmten Absperrzeit von beispielweise 2 min aus dem sich dann einstellenden Sättigungsdampfdruck mittels der bekannten Sorptionsisothermen die Restfeuchte des Trocknungsguts bestimmt werden. Die Patentschrift schlägt vor, etwaige Fehlergrößen durch nicht näher spezifizierte Korrekturmaßnahmen zu korrigieren, wobei als eine Fehlerquelle eine unvermeidbare Undichtigkeit der Trocknungskammer angeführt wird.

Es hat sich gezeigt, dass der Einfluss der Produkttemperatur und etwaiger verbleibender Undichtigkeiten der Trocknungskammer während des Gefriertrocknungsprozesses und während der temporär (weitestgehend) geschlossenen Trocknungskammer in komplexer Weise den Druckanstieg beeinflussen. Des Weiteren haben weitere Einflussgrößen wie ein Wärmeeintrag durch eine Stellfläche, auf welcher die Trocknungsgefäße angeordnet sind, und das Volumen eines das Eis des Trocknungsguts abdeckenden getrockneten Kuchens des Trocknungsguts Einfluss auf den Druckanstieg. Eine Modellierung dieser Abhängigkeiten ist beispielsweise aus

Milton, N., et al., Evaluation of manometric temperature measurement as a method of monitoring product temperature during lyophilization. PDA Journal of Pharmaceutical Science and Technology, 1997. 51(1): S. 7-16
bekannt, wobei Anwendungen der druckbasierten Ermittlung der Produkttemperatur beispielsweise in

Tang, X.L., S.L. Nail, and M.J. Pikal, Evaluation of manometric temperature measurement, a process analytical technology tool for freeze-drying: Part I, product temperature measurement. Aaps Pharmscitech, 2006. 7(1),

Pikal, M.J., X. Tang, and S.L. Nail, Automated process control using manometric temperature measurement. 2005, University of Connecticut; Purdue Research Foundation,

Tang, X.L.C., S.L. Nail, and M.J. Pikal, Evaluation of manometric temperature measurement, a process analytical technology tool for freeze-drying: Part II Measurement of dry-layer resistance. Aaps Pharmscitech, 2006. 7(4),

Tang, X.L.C., S.L. Nail, and M.J. Pikal, Evaluation of manometric temperature measurement (MTM), a process analytical technology tool in freeze drying, Part III: Heat and mass transfer measurement. Aaps Pharmscitech, 2006. 7(4),

Gieseler, H., T. Kramer, and M.J. Pikal, Use of manometric temperature measurement (MTM) and SMART (TM) freeze dryer technology for development of an optimized freeze-drying cycle. Journal of Pharmaceutical Sciences, 2007. 96(12): S. 3402-3418 und

Velardi, S.A. and A.A. Barresi, Method and system for controlling a freeze drying process, 2008.

beschrieben sind.
In der Patentliteratur ist eine druckbasierte Ermittlung einer Produkttemperatur während eines Gefriertrocknungsprozesses sowie die Verwendung der derart ermittelten Produkttemperatur für eine Prozesssteuerung in einem Gefriertrockner beispielsweise in den Druckschriften EP 2 156 124 B1, EP 1 903 291 A1 und US 6,971,187 B1 beschrieben.
Die Veröffentlichung
Tang, X.L., S.L. Nail, and M.J. Pikal, Freeze-drying process design by manometric temperature measurement: Design of a smart freeze-dryer. Pharmaceutical Research, 2005. 22(4): S. 685-700,
offenbart den Einsatz einer manometrischen Temperaturmessung für die Auswahl der optimalen Temperatur der Stellflächen, für eine Ermittlung eines zeitlichen Endes des Trocknungsprozesses, eine Bewertung einer Restfeuchtigkeit in Echtzeit und eine Bewertung der Transferraten hinsichtlich Masse und Wärme. Festgestellt worden ist hierbei, dass ein auf Grundlage der manometrischen Temperaturmessung ermittelter Widerstand der getrockneten Schicht des Produkts bis ungefähr 2/3 der gesamten Dauer der Primärtrocknung hinreichend genau ist, während die mittels der manometrischen Temperaturmessung ermittelte Produkttemperatur üblicherweise bis zum Ende der Primärtrocknung hinreichend genau ist, sofern die thermische Abschirmung, welche während des Gefriertrocknungsprozesses wirksam ist, hinreichend gut ist. Hierbei können die primären Trocknungszeiten hinreichend genau abgeschätzt werden über die Massen-Transferraten, die jeweils berechnet werden. Die Ergebnisse der manometrischen Temperaturmessung werden als herausragender Indikator für eine Ermittlung eines Endes der Primärtrocknung angesehen. Die Rate der Desorption von Wasser während der Sekundärtrocknung kann des Weiteren hinreichend genau gemessen werden durch eine Variation des manometrischen Temperaturmessverfahrens. Bei den der Veröffentlichung zugrundeliegenden Versuchen wurden in stündlichen Intervallen oder halbstündlichen Intervallen während der Primärtrocknung Druckdaten aufgenommen mit einer Rate von vier Messpunkten je Sekunde. Eine Datenaufnahme ist dabei während einer Schließung einer Verschlussklappe für 25 Sekunden erfolgt. Die Veröffentlichung untersucht Einflussgrößen auf die Verlässlichkeit der manometrischen Temperaturmessung. Hierbei wird der Einfluss der Heterogenität der Trocknung der einzelnen Vials, des Kammervolumens, des zu beseitigenden Fluids, des Fortschritts der Primärtrocknung, des Musters der Anordnung der Vials sowie des

Abstands eines Vials von anderen Vials und einem Rand der Stellflächen experimentell nachgewiesen.

Weiterer Stand der Technik ist aus US 2008/0172902 A1 bekannt.

## AUFGABE DER ERFINDUNG

Der vorliegenden Erfindung liegt die Aufgabe zugrunde, ein Verfahren zur druckbasierten Ermittlung eines Produktparameters in einem Gefriertrockner, einen Gefriertrockner mit Steuerlogik zur Durchführung eines derartigen Verfahrens sowie ein Softwareprodukt zur Durchführung eines derartigen Verfahrens vorzuschlagen, welcher oder welches insbesondere hinsichtlich

- der Möglichkeiten, Schnelligkeit, Genauigkeit und/oder Stabilität der druckbasierten Ermittlung des Produktparameters,
- der Möglichkeiten der Steuerung des Gefriertrocknungsprozesses und/oder
- der Wechselwirkung des Verfahrens mit dem Gefriertrocknungsprozess

verbessert ist.

## LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

## BESCHREIBUNG DER ERFINDUNG

Die Erfindung schlägt ein Verfahren vor, mit welchem druckbasiert eine Ermittlung eines Produktparameters in einem Gefriertrockner erfolgen kann. Bei dem Produktparameter handelt es sich vorzugsweise um einen zeitvarianten Produktparameter, der vom Verlauf der Gefriertrocknung und/oder den Prozessbedingungen in den Gefriertrockner abhängig ist. Beispielsweise handelt es sich bei dem zu ermittelnden Produktparameter um eine Produkttemperatur $T$, einen flächennormalisieren Widerstand des trockenen Produkts gegen Dampftransport $R_p$, eine Sublimationrate, einen Wärmedurchgangskoeffizienten $K_v$, einen übertragenden Wärmestrom, eine Dicke einer Eisschicht des Trocknungsprodukts und/oder eine Dicke des getrockneten Trocknungsprodukts. Im Rahmen der Erfindung handelt es sich bei dem zu ermittelnden Produktparameter nicht um einen spezifischen Produktparameter eines konkreten Trocknungsprodukts beispielsweise eines konkreten Vials von einem Batch mit einer Vielzahl von Trocknungsprodukten oder Vials in einer Trocknungskammer eines Gefriertrockners, sondern um einen repräsentativen, insbesondere gemittelten oder ohne Mittelung auf andere Weise ermittelten repräsentativen Produktparameter für sämtliche in einer Trocknungskammer eines Gefriertrockners angeordnete Trocknungsprodukte oder Vials.

Im Folgenden wird die Erfindung bevorzugt beschrieben für die Ermittlung eines als Produkttemperatur ausgebildeten Produktparameters. In sämtlichen derart beschriebenen Fällen kann aber auch im Rahmen der Erfindung eine Ermittlung eines beliebigen anderen Produktparameters erfolgen, so dass die Erfindung nicht auf die Ausbildung des ermittelten Produktparameters als Produkttemperatur beschränkt ist.

In diesem Verfahren wird zu einem Zeitpunkt $t_{START}$ ein Verschlusselement geschlossen, welches zwischen einer Eiskammer, in welcher ein Eiskondensator angeordnet ist, und einer Trocknungskammer, in der die Trocknungsgefäße angeordnet sind, angeordnet ist. Bei dem Verschlusselement kann es sich um eine Verschlussklappe eines Ventils, welches auch als Zwischenventil bezeichnet wird, handeln. Mit der Schließung des Verschlusselementes ist die Trocknungskammer (vollständig oder weitestgehend im Rahmen der technischen Möglichkeiten) geschlossen. Es erfolgt dann (zu ungleichmäßig oder gleichmäßig verteilten Zeitpunkten $t_1$, $t_2$, $t_3$, ...) eine Messung von Druckwerten $P_1$, $P_2$,

$P_3$, ... in der Trocknungskammer, um einen sich (insbesondere infolge der Sublimation) ergebenden Druckanstieg zu erfassen. Aus den gemessenen Druckwerten $P_1$, $P_2$, $P_3$, ... wird dann eine Näherung des Produktparameters, insbesondere der Produkttemperatur $T_{APPROX}$, ermittelt.

Der Erfindung liegt die Beobachtung zugrunde, dass gemäß dem Stand der Technik

- eine Schließungszeit, welche der Zeitspanne zwischen $t_{START}$ und $t_{ENDE}$ entspricht, fest vorgegeben ist,
- während dieser Zeitspanne eine Vielzahl von Druckwerten aufgenommen wird,
- nach Ablauf der fest vorgeschriebenen Zeitspanne das Verschlusselement wieder geöffnet wird, ohne dass bereits ein Ergebnis für die Näherung des Produktparameters (insbesondere der Produkttemperatur) vorliegt, und
- schließlich die Näherung des Produktparameters ermittelt wird.

Erfindungsgemäß wird erstmals vorgeschlagen, dass der Zeitpunkt $t_{ENDE}$ (und damit die Zeitspanne, für welche die Schließung des Verschlusselements erfolgt) nicht a priori festgelegt ist, sondern dieser vielmehr variabel ist: Erfindungsgemäß wird der Zeitpunkt $t_{ENDE}$ spezifisch für die aufgenommenen Druckwerte $P$, $P_2$, $P_3$, ... ermittelt. Somit können sich für unterschiedliche Gefriertrocknungsprozesse oder sogar für denselben Gefriertrocknungsprozess je nach den aufgenommenen Druckwerten unterschiedliche Zeitpunkte $t_{ENDE}$ und damit unterschiedliche Zeitspannen für die Dauer der Schließung des Verschlusselements ergeben. Dies kann auch damit einhergehen, dass die Anzahl N der Zeitpunkte, für welche eine Messung der Druckwerte $P_1$, $P_2$, ... $P_N$ erfolgt, für die unterschiedlichen Gefriertrocknungsprozesse oder auch während eines einzigen Gefriertrocknungsprozesses variiert. Durch die spezifische Bestimmung des Zeitpunktes $t_{ENDE}$ kann somit den jeweiligen Gegebenheiten spezifisch Rechnung getragen werden.

Hierbei erfolgt im Rahmen der Erfindung vorzugsweise die Ermittlung des Zeitpunkts $t_{ENDE}$ und die Ermittlung einer Näherung des Produktparameters, welcher für die Ermittlung des Zeitpunkts $t_{ENDE}$ berücksichtigt wird, bereits vor der Öffnung des Verschlusselements.

In weiterer Ausgestaltung der Erfindung erfolgt zwischen dem Zeitpunkt $t_{START}$ und dem Zeitpunkt $t_{ENDE}$ (also während der Zeitspanne der Schließung des Verschlusselements) sukzessive eine Ermittlung mehrerer Näherungen des Produktparameters (insbesondere der Produkttemperatur $T_{APPROX,1}$, $T_{APPROX,2}$, $T_{APPROX,3}$, ...). Hierbei wird für sukzessive ermittelte Näherungen des Produktparameters eine sich vergrößernde Anzahl von Druckwerten ausgewertet. Erfolgt beispielsweise bis zu einem Zeitpunkt $t_M$ mit $t_{START} < t_M < t_{ENDE}$ eine Messung von Druckwerten $P_1$, $P_2$, ... $P_M$, kann aus diesen Druckwerten die erste Näherung des Produktparameters (insbesondere der Produkttemperatur $T_{APPROX,1}$) ermittelt werden. Mit der Messung des nächsten Druckwerts $P_{M+1}$ zum Zeitpunkt $t_{M+1}$ kann dann die nächste Näherung des Produktparameters (insbesondere der Produkttemperatur $T_{APPROX,2}$) aus den Druckwerten $P$, $P_2$, ... $P_{M+1}$ ermittelt werden. Mit jedem neu aufgenommenen Druckwert kann dann eine weitere Näherung des Produktparameters (insbesondere der Produkttemperatur) ermittelt werden, in der dann sämtliche für die vorangegangenen Näherungen des Produktparameters berücksichtigten Druckwerte sowie ergänzend der neu aufgenommene Druckwert berücksichtigt werden. Mit der Erhöhung der Anzahl der Druckwerte kann somit ein Auswerteverfahren zur Ermittlung der Näherung des Produktparameters mit einer erhöhten Genauigkeit, Konvergenz und/oder Sicherheit arbeiten und auf eine größere Anzahl von Stützstellen gestützt werden.

Für eine weitere Ausgestaltung der Erfindung wird der Zeitpunkt $t_{ENDE}$ so ermittelt, dass eine Öffnung des Verschlusselements erfolgt, wenn eine ermittelte Näherung des Produktparameters einen Schwellwert über- oder unterschreitet. Handelt es sich bei dem Produktparameter um die Produkttemperatur, erfolgt die Öffnung des Verschlusselements vorzugsweise bei einem Überschreiten eines Schwellwerts für die Produkttemperatur. Für diese Ausgestaltung der Erfindung kann bereits während der Schließung des Verschlusselements überwacht werden, ob sich der Produktparameter in einen unerwünschten Parameterbereich entwickelt hat oder entwickeln wird. Wird anhand der ermittelten Näherung des Produktparameters ein unzulässig hoher oder niedriger Produktparameter erkannt, kann optional neben der Öffnung des Verschlusselements auch ein Eingriff in die Prozesssteuerung des Gefriertrocknungsprozesses erfolgen, indem bspw. die Prozesssteuerung so verändert wird, dass eine Absenkung der Produkttemperatur in einen das Trocknungsprodukt schützenden Zustand erfolgt oder im Extremfall auch ein Abbruch des Gefriertrocknungsprozesses erfolgt. Möglich ist auch, dass mit der Erkennung, dass eine ermittelte Näherung des Produktparameters einen Schwellwert über- und/oder unterschreitet, ein Eintrag in eine Prozessdokumentation erfolgen, mittels dessen Betriebsgrößen und der Ablauf des Gefriertrocknungsprozesses dokumentiert werden, so dass dieser kritische Zustand einer u. U. zu hohen Temperatur dokumentiert werden kann.

Für einen besonderen Vorschlag der Erfindung erfolgt die Öffnung des Verschlusselements für das Über- oder Unterschreiten des Schwellwertes durch die ermittelte Näherung des Produktparameters (und unter Umständen auch die Einleitung der zuvor angeführten Zusatzmaßnahmen) nur dann, wenn eine ergänzende Prüfung ergibt, dass die ermittelte Näherung des Produktparameters aller Voraussicht nach hinreichend genau dem tatsächlichen Produktparameter entspricht, was beispielsweise durch das Vorliegen eines Konvergenzkriteriums für mehrere ermittelte Näherungen oder das Überschreiten einer Mindest-Zeitspanne für die Schließung des Verschlusselements erkannt werden kann.

Möglich ist auch, dass der Zeitpunkt $t_{ENDE}$ so ermittelt wird, dass eine Öffnung des Verschlusselements erfolgt, wenn ermittelte Näherungen des Produktparameters ein Konvergenzkriterium erfüllen. Für diese erfindungsgemäße Ausgestaltung erfolgt somit die Schließung des Verschlusselements nur so lange wie tatsächlich erforderlich ist, um eine hinreichend genaue Näherung des Produktparameters zu ermitteln.

Um lediglich beispielhaft ein Konvergenzkriterium zu nennen, kann als Konvergenzkriterium eine Differenz (oder ein Betrag der Differenz) der nacheinander ermittelten Näherungen des Produktparameters ermittelt werden. Unterschreitet diese Differenz einen Schwellwert, kann davon ausgegangen werden, dass die zuletzt ermittelte Näherung des Produktparameters hinreichend stabil ist und/oder die Näherung hinreichend genau dem tatsächlichen Produktparameter entspricht, so dass die Aufnahme weiterer Druckwerte zur Erhöhung der Genauigkeit der Näherung des Produktparameters nicht erforderlich ist und eine Öffnung des Verschlusselements erfolgen kann. Möglich ist auch, dass als Konvergenzkriterium eine Varianz oder Variabilität des identifizierten Produktparameters verwendet wird. Beispielsweise kann die Varianz oder Variabilität bereits das Ergebnis eines für die Ermittlung des Produktparameters eingesetzten Ermittlungsverfahrens, insbesondere einer linearen oder nichtlinearen Regression, sein. Unter Umständen kann somit die Varianz oder Variabilität ohne einen Zusatzaufwand bereitgestellt werden. Als Konvergenzkriterium kann dann geprüft werden, ob die Varianz oder Variabilität kleiner ist als ein vorgegebener Schwellwert. Möglich ist auch, dass mehrere Konvergenzkriterium verwendet werden und eine Öffnung des Verschlusselements erfolgt, wenn ein Konvergenzkriterium erreicht ist oder mehrere oder sämtliche Konvergenzkriterien erreicht sind. Möglich ist aber auch, dass mehrere Konvergenzkriterien, beispielsweise über eine Bewertungsmatrix, miteinander verknüpft werden und dann mit einem Schwellwert verglichen werden. Schließlich ist auch möglich, dass der zu berücksichtigende Schwellwert von weiteren Prozessbedingungen oder dem Fortschritt des Gefriertrocknungsprozesses abhängig ist.

Möglich ist des Weiteren, dass der Zeitpunkt $t_{ENDE}$ so ermittelt wird, dass eine Öffnung des Verschlusselements erfolgt, wenn eine vorgegebene maximale Zeitspanne zwischen dem Zeitpunkt $t_{START}$ und dem Zeitpunkt $t_{ENDE}$ überschritten ist. Dies kann beispielsweise dazu genutzt werden, dass für den Fall, dass die Ermittlungen der Näherungen des Produktparameters trotz immer länger andauernder Schließung des Verschlusselements mit sukzessiver Aufnahme von Druckwerten ein Konvergenzkriterium nicht erfüllen, da beispielsweise ein nichtlineares Regressionsverfahren zur Ermittlung der Näherung des Produktparameters infolge schlecht gewählter Startwerte nicht konvergiert, keine endlose Ermittlung von Druckwerten und von Näherungen des Produktparameters erfolgt und auch die Zeitspanne für die Schließung des Verschlusselements zu lang wird.

Ein besonderer Aspekt der Erfindung widmet sich der Problematik, dass es für die Ermittlung der Näherung der Produktparameter u. U. von großer Bedeutung ist, ab welchem Zeitpunkt $t_0$ gemessene Druckwerte für die Ermittlung der Näherung des Produktparameters verwendet werden. So treten beispielsweise infolge der endlichen Zeit, innerhalb welcher eine Schließung des Verschlusselements mit einem sich u. U. zunehmend verringernden Übertrittsquerschnitt erfolgt, Übergangseffekte auf, welche im Extremfall zur Folge haben, dass der Druck in der Trocknungskammer sogar kurzzeitig abfällt. Erst nach vollständigem Verschließen des Verschlusselements kann tatsächlich von dem geschlossenen System ausgegangen werden, welches u. U. für die Ermittlung der Näherung des Produktparameters zugrunde gelegt werden muss. Möglich ist sogar, dass die Zeitdauer, die erforderlich ist, um das Verschlusselement zu schließen, größer ist als ein Messintervall zwischen der Aufnahme von Druckwerten oder sogar ein Vielfaches hiervon ist. Hierbei gehen die in der vorliegenden Patentanmeldung aufgeführten Modellgleichungen von Pikal (s. die eingangs genannten Literaturstellen) von einem ideal schnell schließenden Ventil mit einer unendlich kleinen Zeitdauer zum Schließen des Verschlusselements aus, während in der Praxis die Zeitdauer endlich (und unter Umständen auch beträchtlich) ist. Andererseits können auch durch ein zu schnell schließendes Verschlusselement Druckschwankungen induziert werden, welche zu unerwünschten Übergangseffekten führen. Um automatisch aus den Druckwerten ermitteln zu können, wann die genannten Übergangseffekte beendet sind oder keinen signifikanten Einfluss auf die Ermittlung der Näherung des Produktparameters haben, wird vorgeschlagen, dass in einem Verfahrensschritt ein Zeitpunkt $t_i$ ermittelt wird, zu dem ein gemessener Druckwert $P_i$ zum ersten Mal einen absoluten oder relativen Wert oberhalb eines zuvor oder zu Beginn gemessenen Druckwerts $P_0$ liegt. Bei dem Druckwert $P_0$ kann es sich um den Druckwert bei dem Beginn des Schließvorgangs des Verschlusselements, dem Ende des Schließvorgangs des Verschlusselements oder einen beliebigen Druckwert zu einem Zeitpunkt zwischen dem Beginn des Schließvorgangs und dem Ende des Schließvorgangs, um einen Druckwert in vorbestimmter zeitlicher Lage zu der Schließung des Verschlusselements, einen Mittelwert des Drucks in zeitlicher Umgebung des Verschlusselements u. ä. handeln. Der Zeitpunkt $t_i$ wird somit so ermittelt, dass gewährleistet ist, dass bereits ein gewisser Anstieg des Druckes in der Trocknungskammer erfolgt ist. Um lediglich ein nicht beschränkendes Beispiel zu nennen, kann als Zeitpunkt $t_i$ der Zeitpunkt gewählt werden, zu welchem der gemessene Druckwert $P_i$ zum ersten Mal um einen vorgegebenen Prozentsatz (bspw. zumindest 5 % oder zumindest 10 %) über dem am Anfang der Schließung des Verschlusselements gemessenen Druckwert $P_0$ liegt. Hierbei wird als relevanter zuvor gemessener Druckwert $P_0$ zu einem Zeitpunkt $t_0$ beispielsweise der Druckwert verwendet, der zu einem Zeitpunkt aufgenommen worden ist, zu welchem die Prozesssteuerung des Gefriertrockners die Schließung des Verschlusselements veranlasst, die Schließung des Verschlusselements erfolgt ist oder ein Antriebselement des Verschlusselements oder ein Sensor für die Bewegung des Verschlusselements signalisiert, dass das Verschlusselement zumindest teilweise geschlossen ist.

Ist der Zeitpunkt $t_i$ ermittelt worden, wird mit Druckwerten $P_i$, $P_{i+1}$, ... eine Näherung einer Anstiegsgeraden des Druckverlaufs über der Zeit ermittelt. Für die Ermittlung dieser Näherung einer Anstiegsgeraden sind somit die zuvor genannten Übergangeffekte zumindest in vermindertem Umfang relevant.

Unter Verwendung der ermittelten Näherung der Anstiegsgeraden wird dann ermittelt, zu welchem Zeitpunkt $t_{INIT}$ die Anstiegsgerade den Druckwert $P_{INIT}$ erreicht, welcher insbesondere dem Druckwert $P_0$ zu Beginn der Schließung des Verschlusselements entspricht. Für die graphische Darstellung des Drucks über der Zeit bedeutet dies, dass der Zeitpunkt $t_{INIT}$ dem Schnittpunkt der Anstiegsgeraden mit einer horizontalen Geraden durch den Druckwert $P_0$ entspricht. Für die dann folgende Auswertung für die Ermittlung der Näherung des Produktparameters, insbesondere der Produkttemperatur, werden dann nur

a) gemessene Druckwerte verwendet, welche an oder nach dem Zeitpunkt $t_{INIT}$ gemessen wurden, und/oder
b) extrapolierte Druckwerte verwendet, die sich aus der ermittelten Anstiegsgeraden ergeben (insbesondere ein extrapolierter Druckwert zu dem Zeitpunkt $t_{INIT}$, zu welchem

unmittelbar kein gemessener Druckwert vorliegt, und/oder mindestens ein extrapolierter Druckwert zu den Zeitpunkten, zu welchen nach $t_{INIT}$ Druckwerte gemessen worden sind mit Ersetzung dieser Druckwerte durch die extrapolierten Druckwerte), während vor dem Zeitpunkt $t_{INIT}$ gemessene Druckwerte hierfür nicht berücksichtigt werden. Vorzugsweise findet eine Koordinatentransformation der gemessenen Druckwerte derart statt, dass der Zeitpunkt $t_{INIT}$ zu dem Zeitpunkt $t = 0$ verschoben wird.

Um lediglich ein nicht beschränkendes Beispiel zu nennen, können im Folgenden ein extrapolierter Druckwert zum Zeitpunkt $t_{INIT}$ sowie eine vorgegebene Anzahl K von extrapolierten Druckwerten zu den Zeitpunkten der Messung von Druckwerten nach $t_{INIT}$ verwendet werden, während danach dann die gemessene Druckwerte verwendet werden. Somit kann sich die für die Ermittlung der Näherung des Produktparameters herangezogene Schar von Druckwerten aus extrapolierten Druckwerten und gemessenen Druckwerten zusammensetzen. Da auf diese Weise die störenden Übergangseffekte zumindest teilweise aus der Ermittlung der Näherung des Produktparameters herausgehalten werden, kann durch diese Gestaltung des erfindungsgemäßen Verfahrens die Genauigkeit bei der Ermittlung der Näherung des Produktparameters erhöht werden und auch eine schnellere Konvergenz sowie eine Erhöhung der Stabilität bei der Ermittlung der Näherung des Produktparameters herbeigeführt werden.

Grundsätzlich erfolgt die Ermittlung der Näherung des Produktparameters unter Verwendung eines beliebigen Modells für die Abhängigkeit zwischen dem Produktparameter und dem Druck, in welchem neben dem Produktparameter weitere nicht bekannte Parameter oder Betriebsgrößen berücksichtigt und/oder zu identifizieren sind, was insbesondere bei der Verwendung einer Anzahl von Druckwerten, welche größer ist als die der zu identifizierenden Unbekannten, möglich ist. Problematisch kann dies aber für ein u. U. komplexes nichtlineares Modell hinsichtlich der Zeitdauer für die Ermittlung der Näherung des Produktparameters (und die Identifizierung der weiteren Unbekannten) und/oder hinsichtlich der Stabilität des Ermittlungsverfahrens für die Näherung u. ä. sein. Von Vorteil ist in einigen Fällen, wenn einzelne Unbekannte in dem Modell für die Abbildung der Abhängigkeit des Drucks von dem Produktparameter oder Startwerte derselben für ein nichtlineares Regressionsverfahren bereits auf anderem Wege ermittelt werden. So vorab identifizierte Unbekannte können dann in dem Modell berücksichtigt werden, womit die Ermittlung der Näherung des Produktparameters vereinfacht wird. Werden derartig ermittelte Unbekannte als Startwert in einem nichtlinearen Regressionsverfahren verwendet, kann hierdurch die Ermittlung der hinreichend genauen oder konvergierenden Näherung des Produktparameters beschleunigt werden und/oder die Stabilität der Ermittlung der Näherung erhöht werden.

Der erfindungsgemäß zur Ermittlung des Produktparameters ausgewertete Druckanstieg infolge der Schließung des Verschlusselements beruht einerseits auf einer Sublimation von Eis aus dem gefrorenen Trocknungsprodukt. Der Energietransport erfolgt hierbei durch den Temperaturunterschied zwischen der Stellfläche und der niedrigen Temperatur an der Sublimationsfront, welche sich wiederum aus dem Druck an der Sublimationsfront ergibt. Bedingt durch den Druckunterschied zwischen der Sublimationsfront und dem Kammerdruck strömt der sublimierte Dampf (durch den bereits getrockneten Kuchen) in die Trocknungskammer. Solange noch Lösungsmittel (bei dem es sich bspw. um Wasser handelt) im Trocknungsprodukt vorhanden ist (Haupttrocknung), hat dieser physikalische Effekt den größten Anteil am Druckanstieg, was insbesondere zu Beginn der Sublimation (beispielsweise bis ca. 30 % des Trocknungsfortschritts während der Haupttrocknung) der Fall sein kann. Dieser zu Beginn der Zeitspanne der Schließung des Verschlusselements vorherrschende Effekt wird im Folgenden als **"Sublimationseffekt"** bezeichnet. Hierbei kann der Sublimationseffekt dadurch beeinflusst werden, welchen Widerstand der Kuchen des Trocknungsprodukts gegen den (Wasser-)Dampftransport durch den Kuchen bereitstellt. Dieser Widerstand wird üblicherweise mit einem Parameter $R_p$ beschrieben, welcher der flächennormalisierte Widerstand des trockenen Trocknungsprodukts gegen (Wasser-) Dampftransport ist. Hierbei ändert sich der Parameter $R_p$ je nach Aufbau des Kuchens und der sich während des Gefriertrocknungsprozesses ändernden Schichtdicke des Kuchens, womit auch der Parameter $R_p$ eine zu identifizierende Unbekannte sein kann.

Dem Sublimationseffekt sind drei weitere physikalische Effekte wie folgt überlagert:

- Es kommt zu einem relativ schnellen Temperaturausgleich über der Eisschicht, welche zu einer Temperaturerhöhung an der Sublimationsfront führt (im Folgenden **"Erwärmungseffekt"**).

- Ein weiterer auftretender und überlagerter Effekt ist, dass die kontinuierliche Erwärmung von Eis durch die Stellfläche zu einem konstanten Druckanstieg führt, da immer weniger Wärme für eine geringer werdende Sublimation benötigt wird (im Folgenden **"Stellflächeneffekt"**).

- Schließlich führt eine u. U. technisch bedingte verbleibende (u. U. geringe) Restleckagerate der Trocknungskammer zu einer im Folgenden als **"Leckageeffekt"** bezeichneten Erhöhung des Drucks in der Trocknungskammer.

Eine Ausgestaltung des erfindungsgemäßen Verfahrens macht sich zu Nutze, dass üblicherweise zu Beginn der Zeitspanne der Schließung des Verschlusselements der Sublimationseffekt überwiegt, was mit einem weitestgehend linearen Anstieg des Druckes verbunden sein kann. Erfindungsgemäß wird vorgeschlagen, dass aus am Anfang nach der Schließung des Verschlusselements (oder nach dem wie zuvor erläutert ermittelten Zeitpunkt $t_{INIT}$) gemessenen Druckwerten eine lineare Anstiegsgerade ermittelt wird. Die Steigung der linearen Anstiegsgeraden korreliert mit der Schnelligkeit des Druckanstiegs durch den Sublimationseffekt. Die lineare Anstiegsgerade oder deren Steigung kann im Rahmen der Erfindung auf vielfältige Weise aus den gemessenen Druckwerten ermittelt werden. Im einfachsten Fall erfolgt dies durch eine lineare Regression.

Hingegen überwiegen mit fortschreitender Zeitdauer der Schließung des Verschlusselements der Stellflächeneffekt und der Leckageeffekt, welche für hinreichend große Zeitdauer (bspw. nach mehr als 10 Sekunden, mehr als 15 Sekunden, mehr als 20 Sekunden und/oder weniger als 30 Sekunden) zu einem linearen Anstieg des Drucks mit der Zeit führen. Für einen Vorschlag des erfindungsgemäßen Verfahrens wird aus zuletzt gemessenen Druckwerten eine Auslaufgerade ermittelt, was beispielsweise ebenfalls mittels einer linearen Regression erfolgen kann.

Grundsätzlich kann bei dem erfindungsgemäßen Verfahren eine nichtlineare Regression zur Ermittlung eines Sublimationsdrucks von Eis, welcher im Folgenden als $P_{ice}$ bezeichnet wird, und des flächennormalisierten Widerstands des trockenen Produkts gegen Dampftransport $R_p$ erfolgen, wobei für die nichtlineare Regression geeignete Startwerte verwendet werden müssen.

Für einen Vorschlag der Erfindung wird bei der nichtlinearen Regression der Startwert für den Sublimationsdruck von Eis $P_{ice,Start}$ aus der wie zuvor erläutert ermittelten linearen Auslaufgeraden und der wie zuvor erläutert ermittelten linearen Anstiegsgeraden ermittelt. Hierbei kann beispielsweise der Startwert für den Sublimationsdruck von Eis $P_{ice,Start}$ dem Schnittpunkt der linearen Auslaufgeraden und der linearen Anstiegsgeraden entsprechen.

Alternativ oder zusätzlich möglich ist, dass bei der nichtlinearen Regression der Startwert für den flächennormalisierten Widerstand des trockenen Produkts gegen Dampftransport $R_{p,Start}$ über ein Modell ermittelt wird, welches produktspezifisch zu wählen ist und beispielsweise von dem Feststoffanteil in dem Trocknungsprodukt und/oder der sich beim Einfrieren ausbildenden Kristallstruktur ist. Für ein hier beispielhaft gewähltes Modell, welches für 5 Massenprozent wässrige Saccharose-Lösung verwendet wird, erfolgt die Modellierung über die folgende Funktion: $R_{p,Start} = a\, L_{dry} + b$. Hierbei ist $L_{dry}$ die Dicke des getrockneten Produkts. Möglich ist, dass für des Ermittlung des Startwerts die Dicke des getrockneten Produkts $L_{dry}$ mit Null angesetzt wird oder diese aus den Sublimationsraten vorangegangener Messung bestimmt wird. Möglich ist bspw. auch, dass hierbei die Parameter $a$, $b$ wie folgt gewählt werden:

$$a = 12000\ \frac{\mathrm{Pa\ s\ m}}{\mathrm{kg}} \qquad ;$$

$$b = 50\ \frac{\mathrm{Pa\ s\ m^2}}{\mathrm{kg}}$$

Für die nichtlineare Regression kann ein beliebiges nichtlineares Regressionsverfahren verwendet werden. Für einen Vorschlag der Erfindung wird als Regressionsverfahren ein Levenberg-Marquardt-Algorithmus verwendet, welcher sich durch eine hohe Robustheit und Stabilität auszeichnet.

Eine Ausführungsform der Erfindung beschränkt zunächst die Identifikation der unbekannten Parameter auf den wichtigsten Parameter, nämlich die Produkttemperatur an der Sublimationsfront. Die anderen Parameter (wie insbesondere der Sublimationsdruck von Eis, der flächennormalisierte Widerstand des trockenen Produkts gegen Dampftransport und ein Parameter X) werden erst nach dem Abschluss der Messung und der Wiederöffnung des Verschlusselements identifiziert, womit einerseits der Aufwand für die Identifikation reduziert werden kann. Andererseits hat sich gezeigt, dass bei einer Identifikation der Parameter die Produkttemperatur relativ schnell konvergiert.

Eine weitere Lösung der der Erfindung zugrunde liegenden Aufgabe stellt ein Gefriertrockner dar. Der Gefriertrockner weist eine elektronische Steuereinheit auf. Die Steuereinheit verfügt über Steuerlogik zur Durchführung eines Verfahrens, wie dieses zuvor beschrieben worden ist.

Eine weitere Lösung der der Erfindung zugrunde liegenden Aufgabe stellt ein Softwareprodukt dar, welches Steuerlogik für die Durchführung des Verfahrens aufweist, wie dieses zuvor erläutert worden ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Diese Merkmale können durch andere Merkmale ergänzt werden oder die einzigen Merkmale sein, aus denen das jeweilige Erzeugnis oder Verfahren besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

**Fig. 1** zeigt beispielhaft einen zeitlichen Verlauf des Drucks in einer Trocknungskammer während der Haupttrocknung und Schließung eines Verschlusselements in der Mitte der Haupttrocknung.

**Fig. 2** zeigt beispielhaft einen zeitlichen Verlauf des Drucks in einer Trocknungskammer während der Haupttrocknung und Schließung eines Verschlusselements am Ende der Haupttrocknung..

**Fig. 3** zeigt die Anteile eines Sublimationseffekts, eines Erwärmungseffekts, eines Stellflächeneffekts und eines Leckageeffekts an dem Verlauf des Drucks gemäß Fig. 1.

**Fig. 4** zeigt einen zeitlichen Verlauf einer aus dem gemessenen Druck berechneten Produkttemperatur an der Sublimationsfront für eine Schließung des Verschlusselements während der Haupttrocknung.

**Fig. 5** zeigt einen zeitlichen Verlauf des Drucks gemäß Fig. 1 mit einer ermittelten linearen Auslaufgeraden, welche den zeitlichen Verlauf des Drucks für hinreichende Zeit nach Schließung des Verschlusselements approximiert.

**Fig. 6** zeigt eine mit zunehmender Zeitdauer konvergierende Steigung (welche mit einem zu identifizierenden Term X in (2) korreliert) der gemäß Fig. 5 ermittelten Auslaufgeraden.

**Fig. 7** zeigt zeitliche Verläufe des Druckes infolge von Übergangseffekten in zeitlicher Umgebung der Schließung des Verschlusselements und eine ermittelte Anstiegsgerade.

**Fig. 8** zeigt eine ermittelte Anstiegsgerade, welche den Druckverlauf mit Schließung des Verschlusselements mit oder unmittelbar nach der Schließung des Verschlusselements approximiert.

**Fig. 9** zeigt eine Ermittlung einer Näherung eines Sublimationsdrucks von Eis ($P_{ice}$) aus der Anstiegsgeraden gemäß Fig. 8 und der Auslaufgeraden gemäß Fig. 5.

**Fig. 10** zeigt exemplarisch für 5 Massenprozent wässrige Saccharose-Lösung einen Bereich des flächennormalisierten Widerstandes des trockenen Produkts gegen (Wasser-) Dampftransport ($R_p$) in Abhängigkeit von der Dicke des getrockneten Trocknungsprodukts bzw. Kuchens.

**Fig. 11** zeigt einen Verlauf der identifizierten Produkttemperatur während der Haupttrocknung und der Nachtrocknung, der aus einem physikalischen Modell und den gemessenen Druckwerten für wiederholte temporäre Schließungen des Verschlusselements identifiziert worden ist.

**Fig. 12** zeigt die zeitlichen Verläufe einer Stellflächentemperatur, einer mittels eines Sensors gemessenen Produkttemperatur, eines gemessenen Drucks und der aus dem gemessenen Druck berechneten Produkttemperatur während der Haupttrocknung und der Nachtrocknung.

**Fig. 13** zeigt ein schematisches Blockschaltbild für ein Verfahren zur druckbasierten Ermittlung einer Produkttemperatur in einem Gefriertrockner.

## FIGURENBESCHREIBUNG

Das erfindungsgemäße Verfahren ist beschrieben im Zusammenhang mit der Ermittlung eines Produktparameters, der hier eine Produkttemperatur ist, bei welcher es sich um eine repräsentative Temperatur für die Temperatur an der Sublimationsfront für sämtliche in einer Trocknungskammer angeordnete Trocknungsprodukte handelt. In der US-amerikanischen Literatur wird diese Produkttemperatur als "product temperature" bezeichnet. Genau genommen handelt es sich um die äquivalente Temperatur des (Wasser-)Dampf-Partialdruckes an der Sublimationsfront.

Ist eine Produkttemperatur ermittelt worden, kann aus dieser über die bekannte, für das in dem Trocknungsprodukt eingesetzte Lösungsmittel spezifische bekannte Sublimationsdruckkurve auch der Druck $P_{ice}$ an der Sublimationsfront berechnet werden.

Das erfindungsgemäße Verfahren kann aber entsprechend auch Einsatz finden für eine Ermittlung eines anderen Produktparameters, welcher unmittelbar identifiziert werden kann oder welcher auf Grundlage einer zuvor ermittelten Produkttemperatur (oder eines anderen Produktparameters) ermittelt werden kann.

Während des Trocknungsprozesses entsteht in dem Trocknungsgefäß ein Temperaturgradient, der im Bereich des getrockneten Kuchens im zeitlichen Verlauf des Trocknungsprozesses gegen die Temperatur der Stellfläche konvergiert. Gleichzeitig nimmt die Wärmekapazität in dem Trocknungsprodukt aufgrund des Wasserverlustes infolge der Sublimation ab. Somit würde ein klassischer, in einem Trocknungsgefäß angeordneter Temperatursensor eine ansteigende Produkttemperatur messen, welche nicht mit der Temperatur an der Sublimationsfront übereinstimmt.

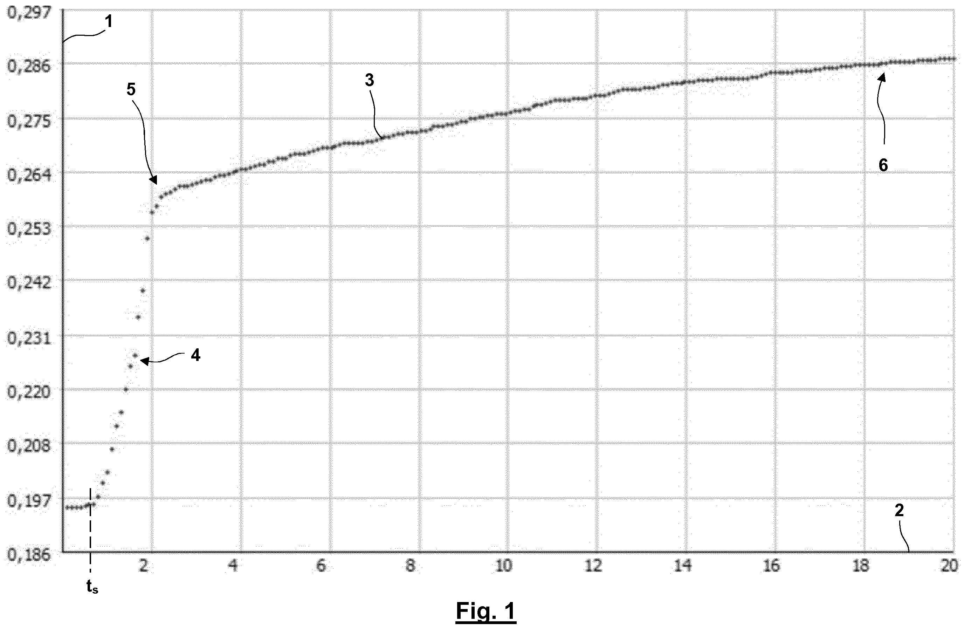

**Fig. 1** zeigt den Verlauf eines an beliebiger Stelle in einer Trocknungskammer über einen Drucksensor gemessenen Drucks $P$ 1 über der Zeit t 2 während und nach einer Verschließung eines Verschlusselements, insbesondere eines Zwischenventils zwischen der Trocknungskammer und einer Eiskammer, womit die Trocknungskammer (teilweise, vollständig oder soweit mit vertretbarem technischem Aufwand möglich) geschlossen und abgedichtet ist. Der in Fig. 1 dargestellte typische Druckverlauf 3 geht aus von einem konstanten Druck vor dem Zeitpunkt $t_s$, zu welchem eine Schließung des Verschlusselements erfolgt. Tatsächlich erfolgt die Schließung nicht zu einem diskreten Zeitpunkt $t_s$, sondern vielmehr innerhalb einer Zeitspanne, welche erforderlich ist, um das Verschlusselement von einer Öffnungsstellung in die Schließstellung zu überführen. Während dieser Zeitspanne ändert sich sukzessive und entsprechend der Antriebscharakteristik eines Antriebs des Verschlusselements der Übertrittsquerschnitt zwischen der Trocknungskammer und der Eiskammer, womit zunehmend eine Verschließung und Abdichtung der Trocknungskammer erfolgt.

Der Druckverlauf 3 verfügt zeitlich unmittelbar an die Schließung des Verschlusselements zum Zeitpunkt $t_s$ anschließend über einen in erster Näherung linearen Anstiegsbereich 4, in dem sich der Druck sehr schnell und in erster Näherung linear mit der Zeit ändert. Dieser Anstiegsbereich 4 dauert zwischen 0,5 s und 2 s, insbesondere 0,7 s und 1,5 s an.

Über einen Übergangsbereich 5, in welchem die Steigung des Druckverlaufs 3 kontinuierlich kleiner wird, geht der Druckverlauf 3 für hinreichend große Zeiten über in einen Auslaufbereich 6, in welchem sich der Druck in erster Näherung linear mit der Zeit ändert.

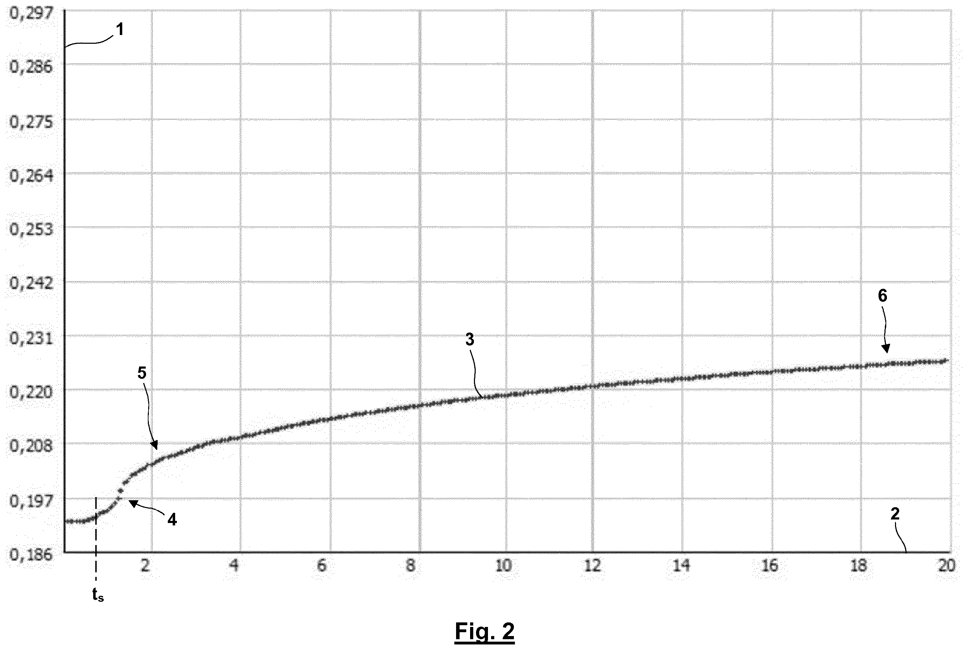

Fig. 1 zeigt den Druckverlauf 3 für einen gemessenen Druckverlauf mit Schließung des Verschlusselements in der Mitte einer Haupttrocknung. In **Fig. 2** ist ein entsprechender Druckverlauf 3 dargestellt, wie sich dieser typischerweise ergibt, wenn das Verschlusselement am Ende der Haupttrocknung geschlossen wird.

Der Vergleich der Druckverläufe 3 gemäß Fig. 1 und 2 zeigt, dass der Anstiegsbereich 4 mit Fortschritt der Haupttrocknung kleiner wird, so dass sich ein kleinerer Druckanstieg ergibt. Des Weiteren zeigt der Vergleich der Fig. 1 und 2, dass mit zunehmender Zeitdauer der Haupttrocknung die Steigung des Druckverlaufs 3 in dem Anstiegsbereich 4 kleiner wird, während sich die Steigung in dem Auslaufbereich 6 vergrößert.

Der Druckverlauf 3 wird im Wesentlichen durch vier unterschiedliche physikalische Effekte hervorgerufen, nämlich durch den Sublimationseffekt, den Erwärmungseffekt, den Stellflächeneffekt und den Leckageeffekt (vgl. die obigen Erläuterungen).

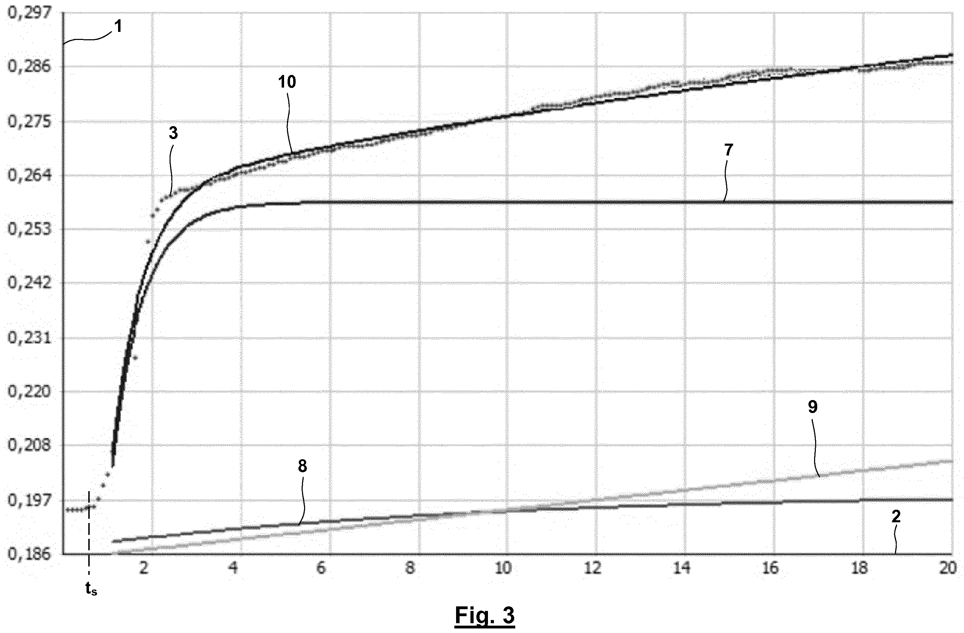

In **Fig. 3** sind die unterschiedlichen Anteile der genannten Effekte an dem Druckverlauf 3 dargestellt, nämlich

- ein Druckverlaufanteil 7 infolge des Sublimationseffekts,
- ein Druckverlaufanteil 8 infolge des Erwärmungseffekts
- sowie ein Druckverlaufanteil 9, welcher sich aus der Überlagerung des Stellflächeneffekts und des Leckageeffekts ergibt.

In Fig. 3 ist des Weiteren ein approximierter Druckverlauf 10 dargestellt, welcher sich aus einer Überlagerung der Ergebnisse einer im Folgenden noch näher erläuterten Modellbildung für die Druckverlaufanteile 7, 8, 9, also aus der Summe dieser Druckverlaufanteile 7, 8, 9, ergibt. In Fig. 3 ist zu erkennen, dass der approximierte Druckverlauf 10 den gemessenen Druckverlauf 3 (in hinreichendem Abstand von dem Zeitpunkt $t_s$) hinreichend gut approximiert.

Beispielsweise den eingangs genannten Literaturstellen können Modellgleichungen zur Modellierung des Druckverlaufs 3 in Abhängigkeit von der Zeit $t$ während und nach der Schließung des Verschlusselements entnommen werden. Hierbei beinhaltet eine Modellgleichung einzelne Terme, welche den Sublimationseffekt, den Erwärmungseffekt und den Stellflächeneffekt sowie den Leckageeffekt beschreiben. Die Modellgleichungen sind für das gewählte Ausführungsbeispiel nichtlinear und von mehreren Unbekannten abhängig, von welchen eine Unbekannte die Produkttemperatur T ist. Bei einem gewählten Modell kann aus einem gemessenen Druckverlauf 3 über bekannte mathematische Verfahren, insbesondere eine nichtlineare Regression, aus der Modellgleichung eine Ermittlung der Unbekannten und damit auch der Produkttemperatur $T$ an der Sublimationsfront (oder der Druck $P_{ice}$ an der Sublimationsfront) erfolgen.

Im Folgenden wird ein mögliches physikalisches Modell dargestellt, ohne dass die erfindungsgemäße Ausgestaltung auf diese Modellbildung beschränkt sein soll:

Gemäß dem hier verwendeten Modell ergibt sich der approximierte, von der Zeit abhängige Druck $P(t)$ wie folgt:

$$P(t) = \quad P_{ice}(T) - \{P_{ice}(T) - P_0\} \exp\left(-\frac{N\, A_p\, R}{M\, V}\, \frac{T_v}{R_p}\, t\right) +$$

$$P_{ice}(T)\, \frac{\Delta H_s}{R\, T_{ice}^2}\, \frac{\Delta T_{ice}}{2}\, \left(1 - \frac{8}{\pi^2} \exp\left(-\frac{\lambda}{c\, l\, \rho_{ice}}\, \frac{\pi^2}{L_{ice}}\, t\right)\right) +$$

$$P_{ice}(T)\, \frac{\Delta H_s}{R\, T_{ice}^2}\, \frac{1}{c\, L_{ice}\, \rho_{ice}}\, K_v\, \left(T_{shelf} - T_b\right) t +$$

$$F_{leak}\, t \qquad\qquad\qquad (1)$$

mit den folgenden Parametern:

| a) Gesuchte Parameter/Unbekannte | | |
|---|---|---|
| Parameter | Einheit | Beschreibung |
| $P_{ice}$ | Pa | Sublimationsdruck des Eises in dem Trocknungsprodukt |
| $R_p$ | $\dfrac{\mathrm{Pa\ s\ m}^2}{\mathrm{kg}}$ | flächennormalisierter Widerstand des trockenen Trocknungsprodukts gegen den (Wasser-) Dampftransport |
| $X$ | $\dfrac{\mathrm{Pa}}{\mathrm{s}}$ | konstanter Anstieg aus Erwärmung des Gases und Leckrate |
| b) Gemessene oder berechnete Parameter | | |
| $t$ | s | Zeit der Messung |
| $T_{shelf}$ | K | Stellflächentemperatur |
| $T_b$ | K | Produkttemperatur am Boden des Trocknungsgefäßes |

(fortgesetzt)

| c) Anlagenspezifische Parameter | | |
|---|---|---|
| $V$ | $m^3$ | Volumen der Trocknungskammer |
| $F_{leak}$ | $\dfrac{\text{Pa}}{\text{s}}$ | Leckagerate der Trockenkammer mit geschlossenem Verschlusselement |
| d) Produktionsspezifische Parameter | | |
| $N$ | | Anzahl der Trocknungsgefäße |
| $A_p$ | $m^2$ | innerer Querschnitt des Trocknungsgefäßes |
| e) Lösungsmittelspezifische Parameter, z.B. Wasser | | |
| $M =$ | $0{,}0180153 \ \dfrac{\text{kg}}{\text{mol}}$ | Molekulargewicht von Wasser |
| $\Delta H_S =$ | $51073 \ \dfrac{\text{J}}{\text{mol}}$ | Molare Sublimationsenthalpie von Wasser (bei 0°C) |
| $\lambda =$ | $2{,}2 \ \dfrac{\text{J}}{\text{s m K}}$ | Wärmeleitfähigkeit von Eis (bei 0°C) |
| $c =$ | $2100 \ \dfrac{\text{J}}{\text{kg K}}$ | Spezifische Wärmekapazität von Eis (bei -2°C) |
| $\rho_{ice} =$ | $918 \ \dfrac{\text{kg}}{\text{m}^3}$ | Dichte von Eis |
| $T_{ice} =$ | $253 \ K$ | Temperatur von Eis |
| f) Konstanten | | |
| $R =$ | $8{,}314 \ \dfrac{\text{J}}{\text{mol K}}$ | Universelle Gaskonstante |
| g) Geschätzte oder festgelegte Parameter (nach Milton, N.; Pikal, M. J.; Roy, M. L. et al. (1997): Evaluation of Manometric Temperature Measurement as a method of Monitoring Product Temperature During Lyophilization, PDA J. Pharma. Sci and Tech., 51, 7-16) | | |
| $T_v$ | K | Temperatur des Dampfes. (Nach Tang, X.; Steven, L.; Pikal, M. (2006): Evaluation of Manometric Temperature Measurement, a Process Analytical. AAPS PharmaSciTech. wird die Temperatur des Dampfes der Stellflächentemperatur gleichgesetzt ($T_v = T_{shelf}$).) |
| $\Delta T_{ice} =$ | 2 K | Temperaturdifferenz zwischen der Sublimationsfront und dem Boden des Trocknungsgefäßes |
| $L_{ice} =$ | 0,01 m | Dicke der gefrorenen Schicht |
| $l =$ | 0,01 m | Abstand vom Boden des Trocknungsgefäßes (unter der Annahme $l = L_{ice}$) |

In obigem Modell (1) ergibt eine Zusammenfassung des dritten und vierten Terms:

$$P(t) = P_{ice}(T) - \{P_{ice}(T) - P_0\} \exp\left(-\frac{N\,A_p\,R}{M\,V}\frac{T_v}{R_p}t\right) +$$

$$P_{ice}(T)\,\frac{\Delta H_s}{R\,T_{ice}^2}\,\frac{\Delta T_{ice}}{2}\left(1 - \frac{8}{\pi^2}\exp\left(-\frac{\lambda}{c\,l\,\rho_{ice}}\frac{\pi^2}{L_{ice}}t\right)\right) + \quad (2)$$

$$X \cdot t$$

mit

$$X = P_{ice}(T)\,\frac{\Delta H_s}{R\,T_{ice}^2}\,\frac{1}{c\,L_{ice}\,\rho_{ice}}\,K_v\,\left(T_{shelf} - T_b\right) + F_{leak} \quad (3)$$

In dem Modell werden die oben beschriebenen wesentlichen Effekte durch physikalische Ansätze und Vereinfachungen für den Wärme- und Stofftransport beschrieben. Der zeitliche Verlauf des Kammerdruckes $P(t)$ hängt von dem Druck $P_{ice}$ an der Sublimationsfront, dem Stoffübergangskoeffizienten $R_p$ und einem Wert $X$ ab. $X$ beschreibt den zeitlichen Anstieg des Drucks in der Trocknungskammer aufgrund der Leckrate der Kammer und der Erwärmung des Produktes durch Wärmezufuhr. Für alle weiteren Unbekannten in dem Modell können vereinfachende Annahmen getroffen werden. Üblicherweise werden diese als konstant angenommen und/oder mit Hilfe von Messungen geschätzt.
Die hier dargestellten Betrachtungen beziehen sich auf ein Produkt mit dem Lösungsmittel Wasser. Das Verhalten wäre aber bei anderen Lösungsmitteln identisch, hierfür sind jedoch die lösungsmittelspezifischen Parameter in der Gleichung (2) an die entsprechenden Stoffdaten anzupassen und eine entsprechende Gleichung für die Sublimationsdruckkurve muss verwendet werden.
Im Ergebnis liefert die angegebene Gleichung (2) den Zusammenhang von

$$P(t) = f\big(P_{ice}(T), R_p, X, t\big).$$

Nach dem Verschließen des Verschlusselements werden mehrere Messungen des Drucks $P(t)$ in der Trocknungskammer durchgeführt, und über geeignete mathematische Verfahren werden die unbekannten Parameter $P_{ice}, R_p, X$ so identifiziert, dass diese den zeitlichen Verlauf des gemessenen Drucks $P(t)$ in der Trocknungskammer möglichst optimal wiedergeben.
Eine derartige Identifikation der Parameter hat für den Druckverlauf 3 in Fig. 3 zum approximierten Druckverlauf 10 geführt. Als mathematisches Verfahren kann hier eine nichtlineare Regressionsanalyse für die gesuchten Parameter $P_{ice}, R_p, X$ eingesetzt werden. Problematisch hierbei kann sein, dass die nichtlineare Regressionsanalyse bei Wahl ungeeigneter Startwerte zu falschen Ergebnissen führen kann oder auch nicht konvergieren kann, womit dann kein Ergebnis erzielt wird. Aus diesem Grund ist bei der Wahl der Startwerte und der Bewertung der Ergebnisse besondere Sorgfalt geboten.
Nach der erfolgreichen Ermittlung des Druck $P_{ice}$ an der Sublimationsfront kann dann über die bekannte Sublimationsdruckkurve des Lösungsmittels die Temperatur an der Sublimationsfront berechnet werden. Somit ist erfindungsgemäß eine Ermittlung der für die Gefriertrocknung wichtigen Produkttemperatur an der Sublimationsfront möglich.
Das hier eingesetzte Verfahren wird auch als manometrische oder barometrische Temperaturmessung (MTM/BTM) bezeichnet. Dabei handelt es sich um ein integrales Modell, dass eine gemittelte Produkttemperatur über alle Trocknungsgefäße in der Trocknungskammer des Gefriertrockners liefert. Die Produkttemperatur wird nicht gemessen, sondern aus dem Druckverlauf in der Trocknungskammer berechnet. Der Druckverlauf in dem Anstiegsbereich wird wesentlich durch die Sublimation des Lösungsmittels bestimmt. Trocknungsgefäße, die zum Zeitpunkt der Messung eine hohe Sublimationsrate aufweisen, beeinflussen dabei den Druckanstieg wesentlich. Dies sind üblicherweise zu Beginn der Haupttrocknung die Trocknungsgefäße am Rand der Stellflächen und am Ende der Haupttrocknung die Trocknungsgefäße in der Mitte der Stellflächen. Die berechnete Produkttemperatur wird dabei schon durch vergleichsweise wenige Trocknungsgefäße mit einer höheren Sublimationsrate bestimmt. Erst nachdem alle Trocknungsgefäße eine sehr geringe Sublimationsrate aufweisen, sinkt die Temperatur (s. auch die folgenden Figuren mit zugeordneter Beschreibung).
Bei der praktischen Anwendung des beschriebenen Modells ergeben sich jedoch u. U. Risiken für das Trocknungsprodukt. Gemäß dem Stand der Technik wird das Verschlusselement für eine fest vorgeschriebene Zeitspanne geschlossen und der Druckverlauf wird innerhalb dieser Zeitspanne in kurzen Abständen gemessen. Nach dem Schließen des Verschlusselements steigt jedoch der Druck in der Trocknungskammer und somit auch der Druck an der Sublimationsfront an. Entsprechend der Sublimationsdruckkurve erhöht sich dadurch auch die Temperatur des Trocknungsproduktes. Insbesondere am Anfang der Haupttrocknung kann dieser Temperaturanstieg des Trocknungsprodukts mehrere Kelvin betragen. Es besteht somit das Risiko, dass die Produkttemperatur eine kritische Temperatur überschreitet und dass das Trocknungsprodukt antaut, was nicht der Fall sein soll. Gemäß dem Stand kann die Auswertung des Druckverlaufs erst erfolgen, wenn sämtliche während der Zeitspanne der Schließung des Verschlusselements aufgenommenen Drücke vorliegen, so dass die Auswertung erst nach der Öffnung des Verschlusselements erfolgt. Da sich der Anstieg des Drucks für unterschiedliche Messreihen mit jeweiliger Schließung des Verschlusselements mit zunehmendem Fortschritt des Trocknungsprozesses stark ändert (am Anfang der Haupttrocknung: immer größer werdender Anstieg im Anstiegsbereich 4; im Verlauf der Haupttrocknung: der Anstieg im Anstiegsbereich 4 bleibt weitestgehend konstant; am Ende der Haupttrocknung verringert sich der Anstieg im Anstiegsbereich 4), haben der Erfindung zugrunde liegende Untersuchungen gezeigt, dass die Verwendung einer fest vorgeschriebenen Zeitspanne für die Schließung des Verschlusselementes nicht optimal ist, da beispielsweise für einige Messreihen die Zeitspanne zu kurz sein kann, womit keine zuverlässige Identifikation der Parameter erfolgen kann, während diese für andere Messreihen unter Umständen zu lang ist, da bereits für eine kürzere Zeitspanne eine hinreichend genaue Identifikation der Parameter möglich gewesen wäre.

Durch das erfindungsgemäße Verfahren kann spezifisch je nach den aufgenommenen Druckwerten eine geeignete Zeitspanne gewählt werden, welche einerseits hinreichend lang ist, um eine hinreichend genaue oder konvergierenden Identifikation der Parameter, insbesondere der Produkttemperatur, zu ermöglichen, und andererseits so kurz wie möglich ist, so dass der Temperaturanstieg so gering wie möglich ausfällt und das Antauen des Trocknungsprodukts und unerwünschte Beeinträchtigungen des Trocknungsprodukts ausgeschlossen sind.

Erfindungsgemäß werden zwei Maßnahmen alternativ oder kumulativ eingesetzt:

a) Die Berechnung der Parameter wird bereits wiederholt während des Messzyklus, d.h. nach jeder Messung eines weiteren Druckwerts oder auch nach einer vorgegebenen Anzahl von Messungen weiterer Druckwerte vorgenommen. Auf Grundlage der jeweiligen identifizierten Parameter kann sowohl bei Konvergenz der Parameter oder bei Überschreitung vorgegebener Maximalwerte kann die Messung dann spezifisch beendet werden und das Verschlusselement wieder geöffnet werden.

b) Die nichtlineare Regressionsanalyse wird durch Optimierungen vereinfacht und somit robuster und schneller gestaltet.

Hierzu im Einzelnen:

Die erfindungsgemäßen Ermittlung der Produkttemperatur durch eine nichtlineare Regression erfolgt nicht erst nach Beendigung des Messzyklus mit fester Messdauer und vorgegebener Zeitspanne für die Schließung des Verschlusselements. Stattdessen werden schon während der Messung und der Schließung des Verschlusselements die Parameter aus den bisher vorliegenden gemessenen Druckwerten berechnet. Nach Erreichen stabiler Werte für die Parameter $P_{ice}, R_p, X$ wird das Verschlusselement wieder geöffnet.

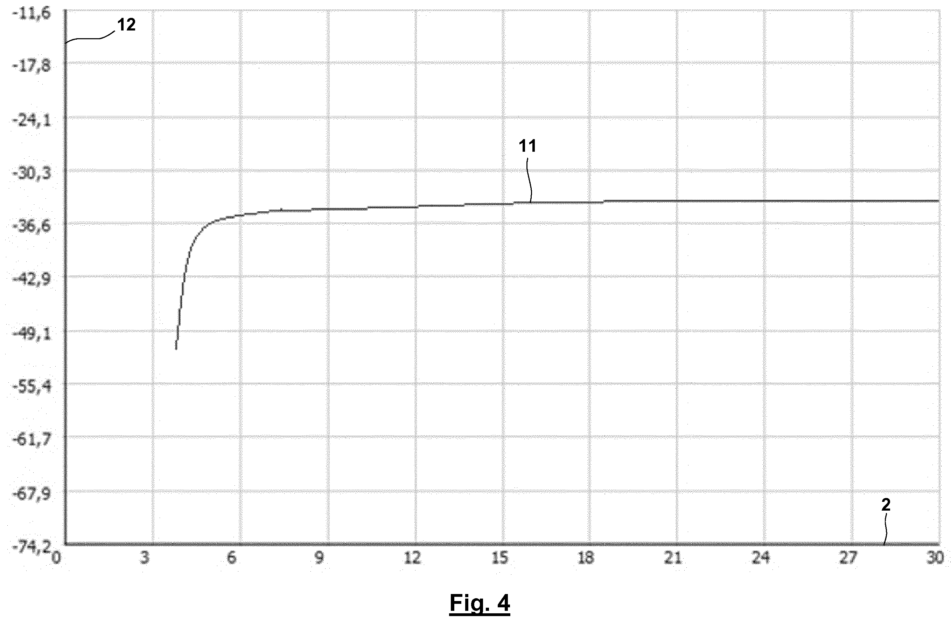

**Fig. 4** zeigt beispielhaft einen Temperaturverlauf 11 der identifizierten Produkttemperatur 12 in Abhängigkeit von der Zeit $t$ 2. In Fig. 4 ist zu erkennen, dass sich die berechnete Produkttemperatur nach einer Messdauer von ca. 5 sec nicht mehr wesentlich verändert, so dass auch für einen Abbruch der Messung und eine Öffnung des Verschlusselements bereits nach ca. 5 sec eine hinreichend exakt ermittelte Produkttemperatur vorliegt und eine längere Zeitspanne der Schließung des Verschlusselements nicht erforderlich ist.

Im Rahmen der Erfindung erfolgt eine Messung des Drucks jeweils nach fest vorgegebenen Zeitintervallen, welche im Bereich von 20 ms bis 200 ms, beispielsweise 50 ms bis 150 ms oder 80 ms bis 120 ms, liegen können, um lediglich einige nicht beschränkende Beispiele zu nennen. Innerhalb dieses Zeitintervalls wird dann eine Identifikation der Parameter $P_{ice}, R_p, X$ durchgeführt, und die Veränderung der berechneten Parameter wird bewertet. Ein Abbruch der Messung und die Wiederöffnung des Verschlusselements können entsprechend dieser Bewertung dann beispielsweise erfolgen, wenn sich gegenüber einer vorangegangenen Identifikation lediglich eine Abweichung eines identifizierten Parameters unterhalb eines vorgegebenen Schwellwerts, also eine hinreichende Konvergenz, ergibt. Ebenfalls möglich ist, dass eine Messung abgebrochen wird und das Verschlusselement wieder geöffnet wird, wenn eine identifizierte Produkttemperatur indiziert, dass die Temperatur an der Sublimationsfront einen Schwellwert überschreitet, was schlimmstenfalls ein Antauen des Eises in dem Trocknungsprodukt indiziert. Möglich ist, dass die unterschiedlichen sukzessiven Identifikationen dieselbe Anzahl von Messwerten des Drucks berücksichtigt, wobei dann die sukzessiven Identifikationen ein mit fortschreitender Zeitdauer mitbewegtes Messfenster mit den darin enthaltenen Druckwerten verwenden können. Möglich ist auch, dass für die sukzessiven Identifikationen eine Auswahl derselben Anzahl von Messwerten aus einer sich vergrößernden Schar von Messwerten erfolgt. Vorzugsweise wird aber für die sukzessive wiederholte Identifikation der Parameter eine sich entsprechend der fortschreitenden Zeit der gemessenen Druckwerte vergrößernde Anzahl von Druckwerten verwendet, so dass das den Identifikationen zugrunde liegende Messfenster immer größer wird. Eine Bewertung kann des Weiteren auf Grundlage

- einer Unterschreitung von relativen oder absoluten Veränderungen von Messung zu Messung bzw. Identifikation zu Identifikation und/oder

- einer statistischen Betrachtung wie ein Konfidenzintervall, eine Standardabweichung der berechneten Parameter oder auch die Veränderung einer Federquadratsumme hinsichtlich eines Vergleichs des berechneten Druckverlaufs auf Grundlage der identifizierten Parameter mit dem gemessenen Druckverlauf

erfolgen.

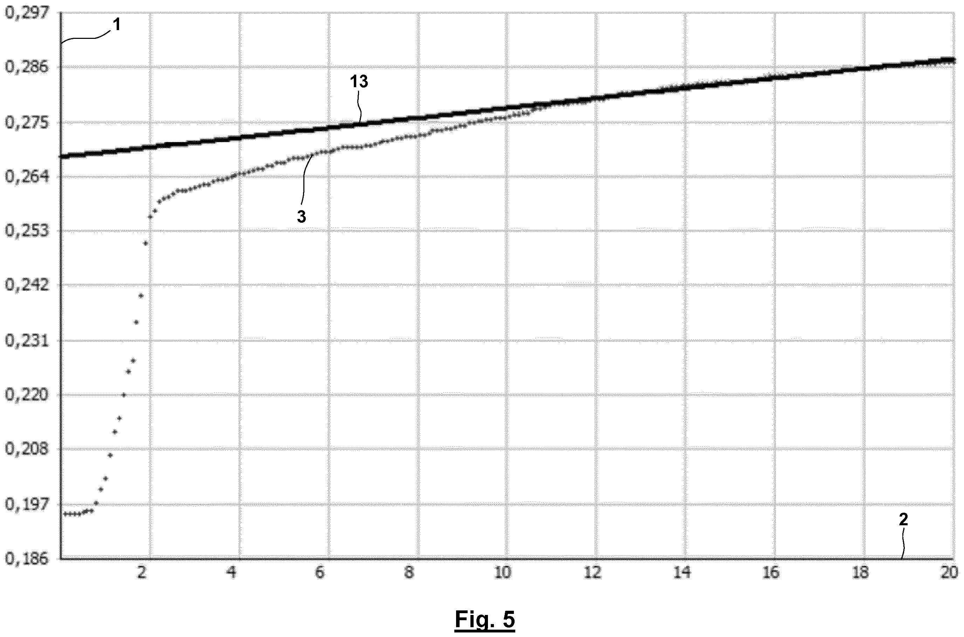

Eine weitere Optimierung kann erfindungsgemäß durch die teilweise Linearisierung der Regressionsaufgabe erfolgen. Für große Messdauer und Schließdauer des Verschlusselements überwiegt der dritte Summand in der Gleichung (2), so dass hier vereinfachend von einem linearen Zusammenhang zwischen berechnetem Druck und der Zeit ausgegangen werden kann. Dies ist beispielhaft in **Fig. 5** dargestellt, in welcher der Druck $P$ 1 über der Zeit $t$ 2 dargestellt ist. Hier nähert sich der Druckverlauf 3 asymptotisch einer Auslaufgeraden 13 an, welche mittels einer linearen Regression berechnet werden kann. Die Steigung der Auslaufgeraden 13 entspricht hierbei dem zu identifizierenden Parameter $X$. Somit kann über eine lineare Regression eine ersten Näherung des Parameters $X$ identifiziert werden, ohne dass hierfür eine komplexe, einen hohen Zeit- und Rechnungsaufwand erfordernde nichtlineare Regression durchgeführt werden muss.

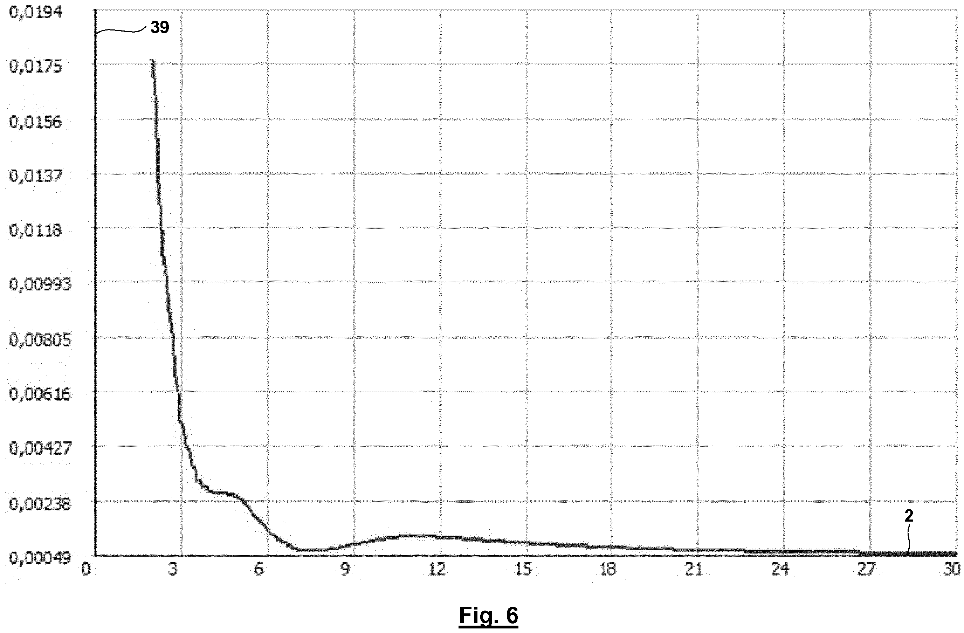

**Fig. 6** zeigt die berechnete Steigung 39 der Auslaufgeraden 13, also den anhand einer linearen Regression identifizierten Parameter $X$ in (2), mit fortschreitender Zeit der Schließung des Verschlusselements und sukzessiver Ermittlung der Steigung 39 mit Aufnahme weiterer Druckwerte. In Fig. 6 ist zu erkennen, dass sich der identifizierte Parameter $X$ ca. nach 6 sec nicht mehr wesentlich ändert, so dass zu diesem Zeitpunkt mittels der linearen Regression bereits ein sehr guter Startwert für den Parameter $X$ vorliegt, über welchen dann auch mittels einer nichtlinearen Regression eine Identifikation der Parameter einschließlich eines verbesserten Parameters $X$ erfolgen kann und/oder u. U. nach dieser Zeitspanne bereits die Messung beendet werden kann und die Wiederöffnung des Verschlusselements erfolgen kann.

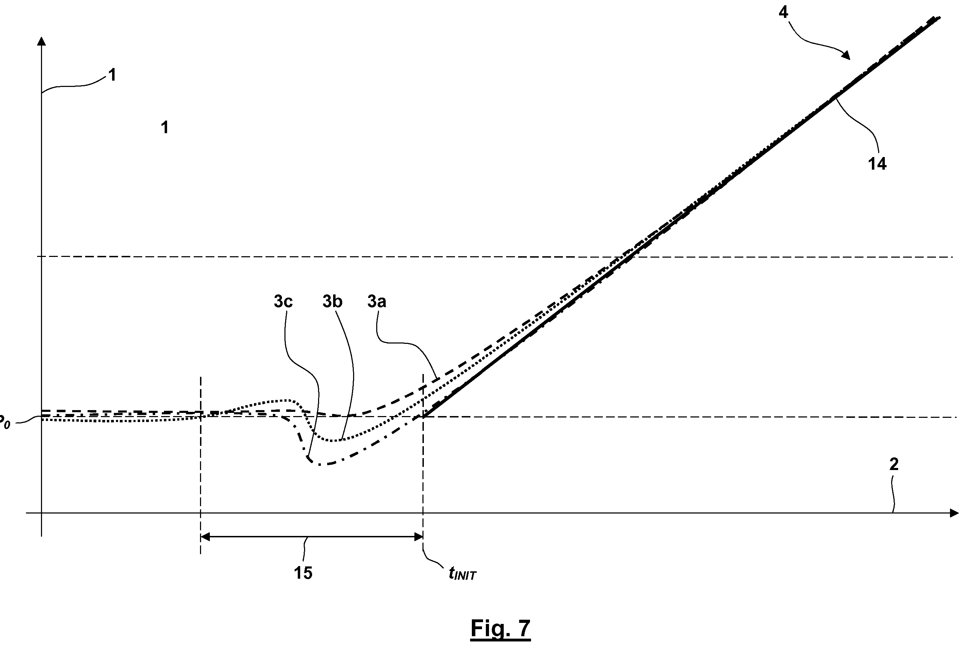

Ein weiteres Problem bei der Identifikation der Parameter stellen Übergangseffekte dar, welche in zeitlicher Umgebung der Schließung des Verschlusselements auftreten. **Fig. 7** zeigt den Druckverlauf 3 stark vergrößert und schematisiert in zeitlicher Umgebung des Schließens des Verschlusselements. Zu erkennen ist hier, dass vor dem Beginn der Schließung des Verschlusselements der Druck konstant ist und $P_0$ beträgt und sich der Druck für hinreichend lange Zeit nach der vollständigen Schließung des Verschlusselements in dem Anstiegsbereich 4 einer Anstiegsgeraden 14 asymptotisch annähert. In dem dazwischen angeordneten Übergangsbereich 15 ergeben sich Druckverläufe, welche sich nicht durch die eingesetzten Modelle des Druckverlaufs, insbesondere das oben beschriebene Modell, beschreiben lassen, da übliche Modelle von einem sofort geschlossenen Verschlusselement ausgehen, was technisch nicht möglich ist. Werden dann bei der Identifikation der Parameter in dem verwendeten Modell die Druckverläufe mit den Übergangseffekten in dem Übergangsbereich 15 für die Identifikation der Parameter verwendet, führt dies zu einer Verfälschung der Identifikation oder auch zu einer schlechteren Konvergenz der Ergebnisse der Regression.

**Fig. 7** zeigt eine Anstiegsgerade 14 in dem Anstiegsbereich 4 des Druckverlaufs 3, welche mittels einer linearen Regression ermittelt worden ist. Hierbei kann die lineare Regression lediglich Druckwerte berücksichtigen, welche ab dem Zeitpunkt $t_s$ der Schließung des Verschlusselements aufgenommen worden sind oder auch eine vorgegebene Zeitspanne nach diesem Zeitpunkt aufgenommen worden sind. Ebenfalls möglich ist, dass lediglich Druckwerte verwendet werden, die in dem Anstiegsbereich 4 um einen absoluten oder relativen Betrag oberhalb des Ausgangsdrucks $P_0$ vor der Schließung des Verschlusselements liegen. Des Weiteren kann eine lineare Regression mit der Identifikation der Anstiegsgeraden 14 so lange erfolgen, bis sich eine hinreichende Konvergenz der identifizierten Parameter der Anstiegsgeraden 14 ergeben hat.

Mit derart identifizierter Anstiegsgerade 14 erfolgt dann gemäß **Fig. 7** eine Extrapolation der Anstiegsgeraden 14 mit der Ermittlung des Zeitpunkts $t_{INIT}$, zu welchem die Anstiegsgerade 14 den Ausgangsdruck $P_0$ erreicht hat. Für die nachfolgende Identifikation der Parameter werden dann ausschließlich gemessene Druckwerte verwendet, welche nach dem ermittelten Zeitpunkt $t_{INIT}$ aufgenommen worden sind, womit die Identifikation erschwerende oder verfälschende Druckwerte in dem Übergangsbereich 15 von der Identifikation ausgeschlossen sind. Möglich ist optional auch, dass gemessene Druckwerte nach dem Zeitpunkt $t_{INIT}$ in dem Anstiegsbereich 4 durch die korrespondierenden Werte der Anstiegsgerade 14 ersetzt werden, was zumindest für eine vorgegebene Zeitspanne nach dem Zeitpunkt $t_{INIT}$ der Fall sein kann. Alternativ oder zusätzlich möglich ist, das für die Identifikation auch ein Druckwert zum Zeitpunkt $t_{INIT}$ verwendet wird, welcher aus der Anstiegsgerade 14 ermittelt worden ist. Vorzugsweise erfolgt nach der Ermittlung des Zeitpunkts $t_{INIT}$ eine Koordinatentransformation derart, dass der Zeitpunkt $t_{INIT}$ in den Ursprung des Koordinatensystems verschoben wird, womit alle Zeitwerte um den Betrag von $t_{INIT}$ verschoben werden, während die zugeordneten Druckwerte unverändert bleiben.

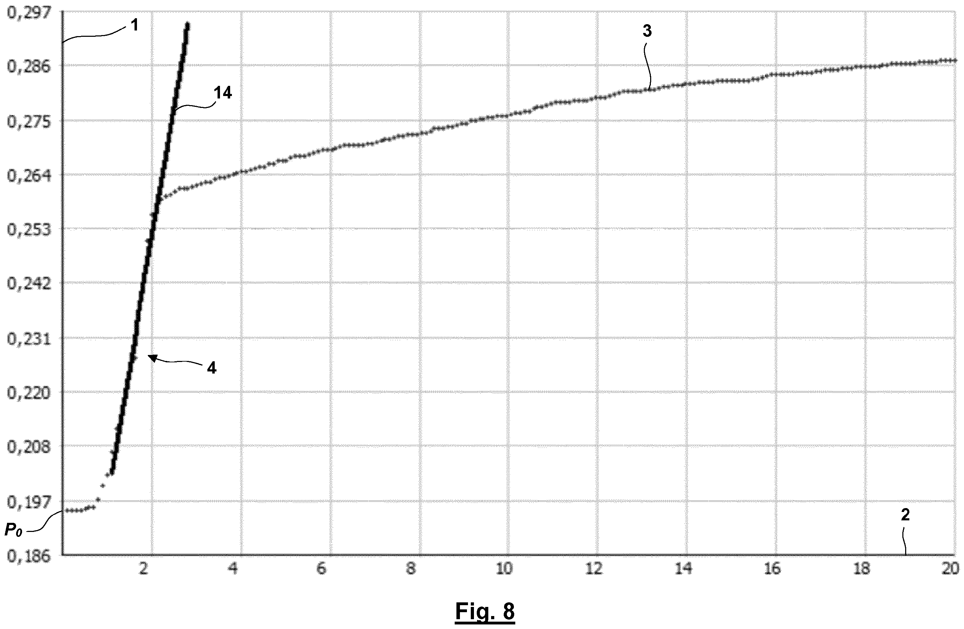

Wie in Fig. 8 zu erkennen ist, beschreibt die ermittelte Anstiegsgerade 14 den Anstiegsbereich 4 des Druckverlauf 3 hinreichend gut.

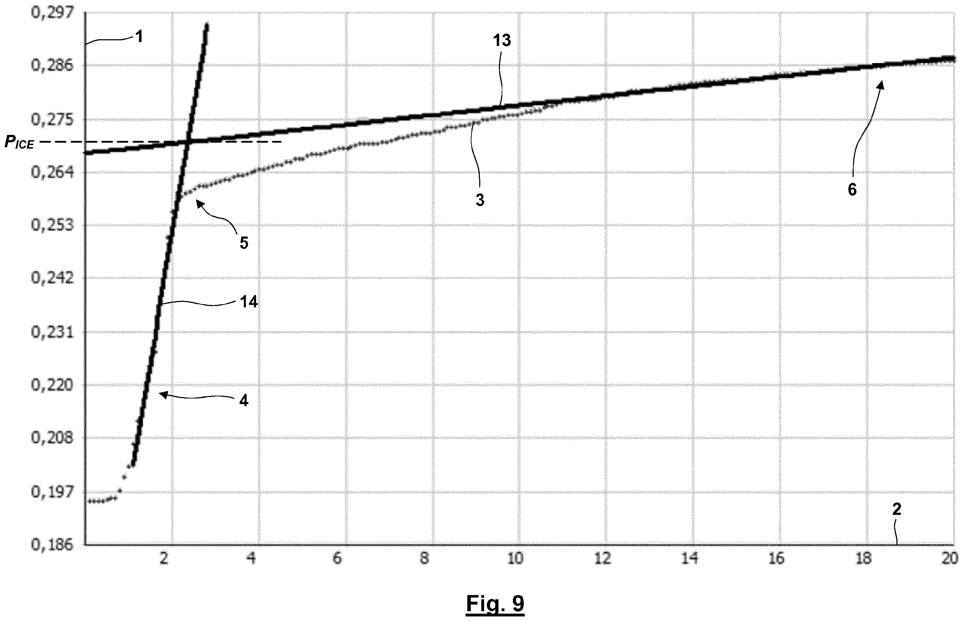

Im Rahmen der Erfindung wird alternativ oder zusätzlich vorgeschlagen, dass eine Identifikation eines Startwerts einer nichtlinearen Regression für $P_{ice}$ oder für den Parameter $P_{ice}$ selbst anhand des Schnittpunktes der Anstiegsgeraden 14 mit der Auslaufgeraden 13 ermittelt wird (vgl. **Fig. 9**), womit dann auch unmittelbar ein Startwert für die Produkttemperatur selber identifiziert ist.

U. U. kann im Rahmen der Erfindung allein auf Grundlage einer linearen Regression mittels der Steigung der Auslaufgeraden 13 sowie dem Schnittpunkt der Auslaufgeraden 13 mit der Anstiegsgeraden 14 eine Identifikation des Drucks an der Sublimationsfront $P_{ice}$ und damit auch der Produkttemperatur sowie des gesuchten Parameters X erfolgen oder entsprechend ein Startwert für eine nichtlineare Regression gewonnen werden kann, wobei durch die teilweise Linearisierung und die Vorgabe eines sinnvollen Startwerts für den gesuchten Druck an der Sublimationsfront die nichtlineare Regressionsanalyse deutlich robuster werden kann und zuverlässigere Ergebnisse liefern kann.

Das verwendete Modell kann einerseits zwei unterschiedliche Exponentialfunktionen und andererseits einen linearen Anteil aufweisen. Dies kann zur Folge haben, dass über einen schlechten Startwert für einen zu ermittelnden Parameter für den Stoffübergang $R_p$ die Identifikation der nichtlinearen Regression nicht konvergiert und u. U. abgebrochen wird. Aus diesem Grund schlägt eine Ausführungsform der Erfindung vor, dass als letzter Punkt der Startwert für den Parameter $R_p$ berechnet wird, was neben einer Verkürzung der vorangehend durchgeführten Iterationen auch dazu führt, dass mit einem stabilen Verfahren das richtige Minimum bei der nichtlinearen Regression gefunden wird.

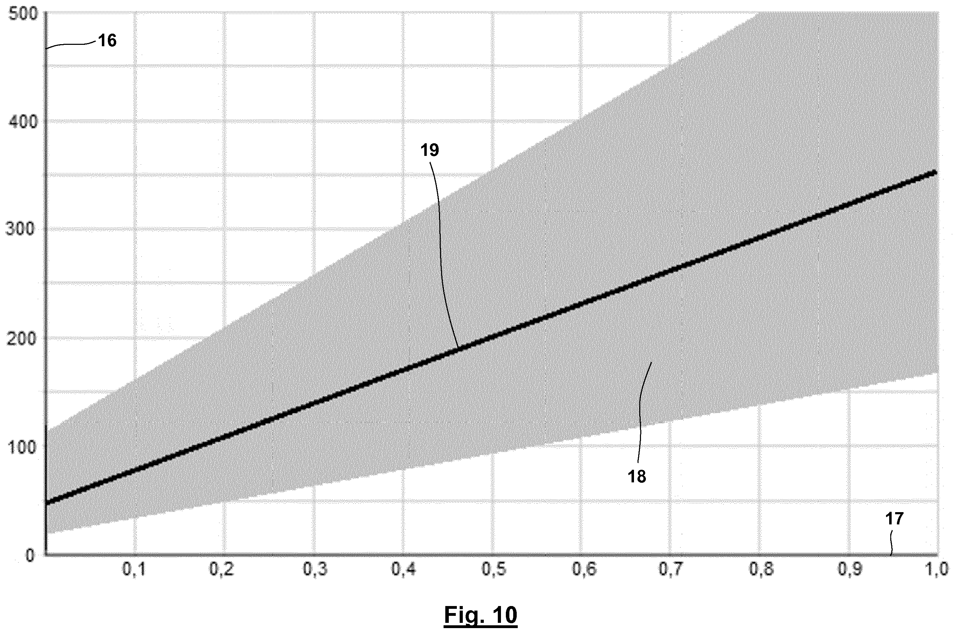

Für ein hier beispielhaft gewähltes Modell, welches für 5 Massenprozent wässrige Saccharose-Lösung verwendet wird, bewegen sich die in der Literatur angegebenen Werte für $R_p$ in Abhängigkeit von der Dicke des getrockneten Produkts in einem Bereich, der in **Fig. 10** graphisch dargestellt ist. Hier ist der Parameter $R_p$ 16 als Funktion der Dicke $L_{dry}$ 17 dargestellt. Möglich ist eine Modellierung von $R_p$ wie folgt:

$$R_p = a\, L_{dry} + b \tag{4}$$

mit folgenden Parametern:

| a) Gesuchte Parameter | | |
|---|---|---|
| $R_p$ | $\dfrac{\mathrm{Pa\ s\ m^2}}{\mathrm{kg}}$ | flächennormalisierter Widerstand des trockenen Trocknungsproduktes gegen (Wasser-)Dampftransport |
| **b) Gemessene oder berechnete Parameter** | | |
| $L_{dry}$ = | m | Dicke des getrockneten Trocknungsproduktes; wird insbesondere entweder mit Null angesetzt oder wird aus der Sublimationsrate bestimmt, die in einer vorangegangenen Messung identifiziert worden ist. |
| **c) Geschätzte oder festgelegte Parameter** | | |
| $a$ | $12000\,\dfrac{\mathrm{Pa\ s\ m}}{\mathrm{kg}}$ | $a$ und $b$ werden so gewählt, dass der Startwert für $R_p$ mittig in dem in Fig. 10 dargestellten Bereich liegt. |
| $b$ | $50\,\dfrac{\mathrm{Pa\ s\ } m^2}{\mathrm{kg}}$ | |

Mit diesem Modell wird ein Startwert für $R_p$ in dem in Fig. 10 grau dargestellten Bereich 18, nämlich entsprechend einer Näherungsgeraden 19, gewählt. Durchaus möglich ist, dass für dasselbe Trocknungsmittel oder auch ein anderes Trocknungsmittel das obige Modell oder auch ein abweichendes Modell verwendet wird.

Eine Optimierung der Identifikation kann insbesondere mittels der folgenden Maßnahmen im Rahmen der vorliegenden Erfindung herbeigeführt werden:

- Festgestellt worden ist, dass sich mit einer Verringerung der Anzahl der Trocknungsgefäße in der Trocknungskammer ein langsamerer Anstieg des Druckverlaufs in dem Anstiegsbereich ergibt. Diese Kenntnis kann dadurch berücksichtigt werden, dass (insbesondere für die nichtlineare Regression) die Anzahl der gemessenen Druckwerte und damit die Zeitspanne für die Verschließung des Verschlusselements abhängig gemacht wird von der Anzahl der in der Trocknungskammer angeordneten Trocknungsgefäße. Insbesondere wird die Zeitspanne der Schließung des Verschlusselements und die Anzahl der gemessenen Druckwerte mit einer Verringerung der Anzahl der in der Trocknungskammer angeordneten Trocknungsgefäße größer gewählt. Möglich ist hierbei auch, dass nach der Befüllung des Gefriertrockners mit den Trocknungsgefäßen vor dem Beginn der Gefriertrocknung ein Benutzer manuell die Anzahl der in der Trocknungskammer angeordneten Trocknungsgefäße über eine Eingabeeinheit an die Steuereinheit übermittelt oder mindestens eine Klassifizierung für die Anzahl der Trocknungsgefäße (bspw. "kleine Anzahl", "mittlere Anzahl" oder "große Anzahl") eingibt, womit dann eine Anpassung der Zeitspanne für die Schließung des Verschlusselements und/oder die Anzahl der zu messenden Druckwerte durch die Steuereinheit erfolgen kann. Möglichst aber auch, dass bei einem automatischen Beladen des Gefriertrockners die Anzahl der in die Trocknungskammer eingeführten Trocknungsgefäße gezählt wird und dann die Anzahl der Trocknungsgefäße automatisch berücksichtigt wird. Des Weiteren kann eine automatische Erfassung oder manuelle Eingabe der Größe der Trocknungsgefäße, dessen Innendurchmesser u. ä. erfolgen.

- Mit fortschreitender Trocknung kann ebenfalls eine Vergrößerung der Zeitspanne für die Schließung des Verschlusselements und die Anzahl der gemessenen Druckwerte erfolgen.

- Vorzugsweise erfolgt eine Messung der Druckwerte mit 1 bis 100 Messungen pro Sekunde, beispielsweise mit 5 bis 60 oder 10 bis 20 Messungen pro Sekunde.

- Für die nichtlineare Regression findet vorzugsweise das oben angeführte Modell und/oder ein Regressions-Algorithmus, welcher als Levenberg-Marquardt-Algorithmus bekannt ist, Einsatz, während die linearen Anteile wie erläutert mittels einer linearen Regression ermittelt werden können.

Im Rahmen des erfindungsgemäßen Verfahrens können auf die folgenden Verfahrensschritte ausgeführt werden:
- Es kann eine Bewertung der identifizierten Parameter hinsichtlich Güte der Regression, z. B. Konfidenzintervall bzw. Standardabweichung der Parameter, Veränderung der Fehlerquadratsumme mit den Iterationsschritten, u. ä. erfolgen.
- Mit der Kenntnis der Verläufe des Sublimationsdrucks $P_{ice}$ und des Produktwiderstands $R_p$ lässt sich der Verlauf der Sublimationsrate errechnen:

$$\frac{dm}{dt} = N\, A_p\, \frac{P_{ice} - Pc}{R_p} \tag{5}$$

mit folgenden Parametern:

| ba) Gesuchte Parameter | | |
|---|---|---|
| $\dfrac{dm}{dt} =$ | $\dfrac{\text{kg}}{\text{s}}$ | Sublimationsrate |
| bb) Produktionsspezifische Parameter | | |
| $N$ | | Anzahl der Trocknungsgefäße |
| $A_p$ | $\text{m}^2$ | innerer Querschnitt des Trocknungsgefäßes |
| bc) Gemessene oder berechnete Parameter | | |
| $P_{ice}$ | Pa | Sublimationsdruck von Eis |
| $P_C$ | Pa | Prozessdruck während der Trocknungsphase |
| $R_p$ | $\dfrac{\text{Pa s m}^2}{\text{kg}}$ | flächennormalisierter Widerstand des trockenen Trocknungsprodukts gegen (Wasser-) Dampftransport |

- Aus der Sublimationsrate und der errechneten Produkttemperatur lässt sich damit der Wärmedurchgangskoeffizient abschätzen, wobei aufgrund des inhomogenen Trocknungsfortschrittes die Ergebnisse verfälscht werden können.

$$K_v = \cfrac{\Delta H_s}{N\, A_p\ (T_{shelf} - T_p)}\ \frac{dm}{dt} \qquad\qquad (6)$$

mit folgenden Parametern:

| a) Gesuchte Parameter | | |
|---|---|---|
| $K_v$ | $\dfrac{W}{m^2\ K}$ | Wärmedurchgangskoeffizient |
| **b) Produktionsspezifische Parameter** | | |
| $N$ | | Anzahl der Trocknungsgefäße |
| $A_p$ | $m^2$ | innerer Querschnitt eines Trocknungsgefäßes |
| **c) Gemessene oder berechnete Parameter** | | |
| $T_{shelf}$ | K | Temperatur der Stellflächen |
| $T_p$ | K | Produkttemperatur an der Sublimationsfront |
| $\dfrac{dm}{dt}$ | $\dfrac{kg}{s}$ | Sublimationsrate |
| **d) Lösungsmittelspezifische Parameter, z. B. Wasser** | | |
| $\Delta H_S$ | $2835000\ \dfrac{J}{kg}$ | Spezifische Sublimationsenthalpie von Wasser (bei 0°C) |

- Die Kenntnis der Sublimationsrate und des Wärmedurchgangskoeffizienten erlaubt eine Bewertung des Trocknungsverlaufes und eine chargenübergreifende Bewertung der verwendeten Glasqualität der Trocknungsgefäße im Rahmen eines fortlaufenden Chargenvergleiches.

Es ist festzustellen, dass bei einer erfindungsgemäßen Verringerung der zu identifizierenden Parameter für die nichtlineare Regression von drei Parametern auf zwei Parameter und die Identifikation geeigneter Startwerte für $P_{ice}$ und $R_p$ die nichtlineare Regression auch nach sehr kurzen Messzeiten (bspw. < 10 sec) schon eine stabile Näherung für die Produkttemperatur an der Sublimationsfront des Trocknungsprodukts liefert.

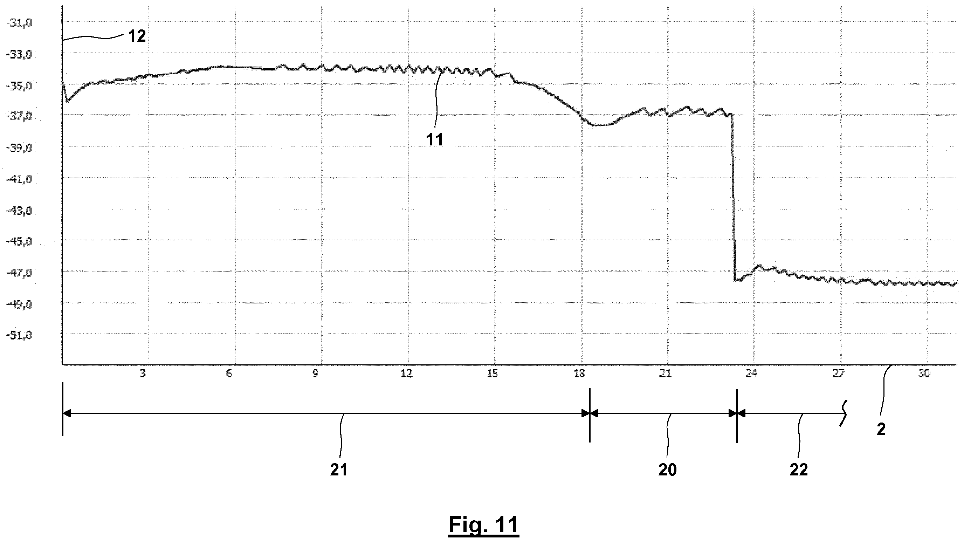

**Fig. 11** zeigt einen Temperaturverlauf 11 der aus Druckverläufen 3 identifizierten Produkttemperatur 12 in Abhängigkeit von der Zeit $t_2$, welche hier für mehrere Stunden dargestellt ist. Die Produkttemperaturen 12 des Temperaturverlaufs 11 sind hierbei immer wieder nach vorbestimmten Zeiten (insbesondere nach einer Zeitspanne im Bereich von 1 bis 5 min) durch Schließung des Verschlusselements und Identifikation der Produkttemperatur 12 anhand des zuvor erläuterten Verfahrens identifiziert worden. Hier ist zu erkennen, dass die Produkttemperatur am Ende eines Haupttrocknungsbereichs 21 deutlich (hier um zumindest 8 K) abnimmt. Die aus den Druckverläufen ermittelten Produkttemperaturen eignen sich somit auch zur Detektion des Endes der Haupttrocknung. Für das in Fig. 11 dargestellte Ausführungsbeispiel fließt die Nachtrocknung 22 nicht unmittelbar an die Haupttrocknung 21 an.

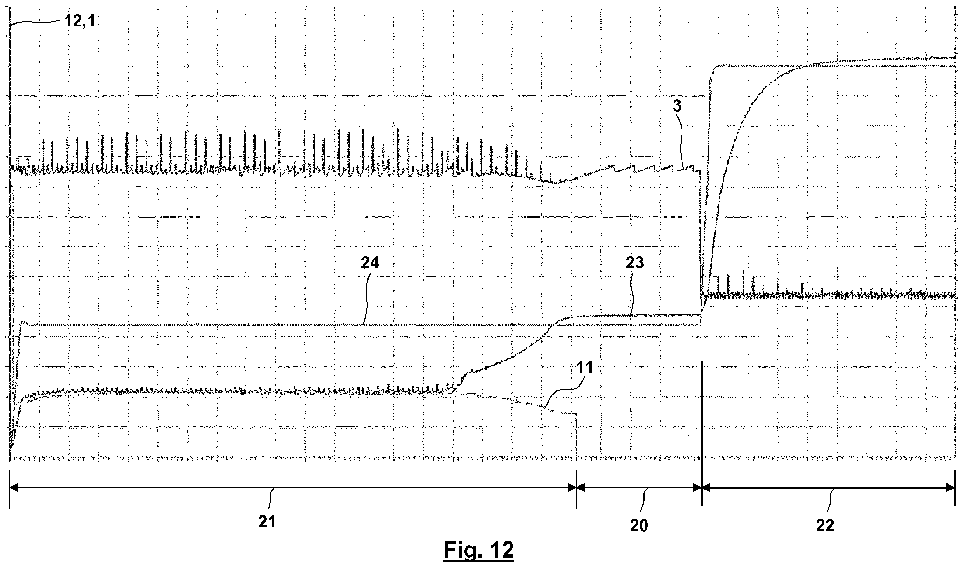

**Fig. 12** zeigt den aus dem gemessenen Druckverlauf 3 ermittelten Temperaturverlauf 11 der Produkttemperatur 12 (in einer grundsätzlich Fig. 11 entsprechenden Darstellung und einem entsprechenden Zeitraum) sowie einen Temperaturverlauf 23 eines Sensors, welcher in einem Trocknungsgefäß angeordnet ist, sowie einen Temperaturverlauf 24 der Temperatur einer Stellfläche, auf welcher Trocknungsgefäße angeordnet sind. Deutlich zu erkennen ist, dass für einen großen Teil der Haupttrocknung die Temperaturläufe 11, 23 in hinreichender Genauigkeit übereinstimmen, während sie am Ende der Haupttrocknung auseinanderlaufen. Grund hierfür ist, dass der in dem Trocknungsgefäß angeordnete Sensor die mittlere Temperatur in dem Trocknungsgefäß einschließlich der Temperatur des gesamten Kuchens misst, welche sich gegen Ende der Haupttrocknung immer weiter der Stellflächentemperatur annähert und somit signifikant ansteigt.

Gegen Ende der Haupttrocknung bestimmen der Stellflächeneffekt und der Leckageeffekt maßgeblich den Druckverlauf während der Schließung des Verschlusselements, so dass sich der Druckanstieg während der Schließung des Verschlusselements einem linearen Verlauf annähert. Auf diese Weise kann das Ende der Haupttrocknung erkannt werden.

In Fig. 12 kann infolge des Abfalls des Temperaturverlaufs 11 das Ende der Haupttrocknung erkannt werden, welches hier auch dadurch erkannt werden kann, dass der Temperaturverlauf 23 der von dem in dem Trocknungsgefäß angeordneten Sensor gemessenen Temperatur dem Temperaturverlauf 24 für die Temperatur der Stellfläche entspricht. Auch für das Ausführungsbeispiel gemäß Fig. 12 wird nicht unmittelbar mit dem Ende der Haupttrocknung 21 die Nachtrocknung 22 durch Erhöhung der Temperatur der Stellfläche eingeleitet. Vielmehr erfolgt dies erst mit einem zeitlichen Versatz 20.

In dem Druckverlauf 3 gemäß Fig. 12 sind mittels der Peaks die Druckanstiege während der Schließung des Verschlusselements zu erkennen, wobei hier infolge der gewählten zeitlichen Auflösung aber u. U. nicht sämtliche Druckanstiege dargestellt sind. Vorzugsweise erfolgt eine Auswertung des Druckanstiegs bei der Schließung des Verschlusselements alle 15 bis 30 Minuten.

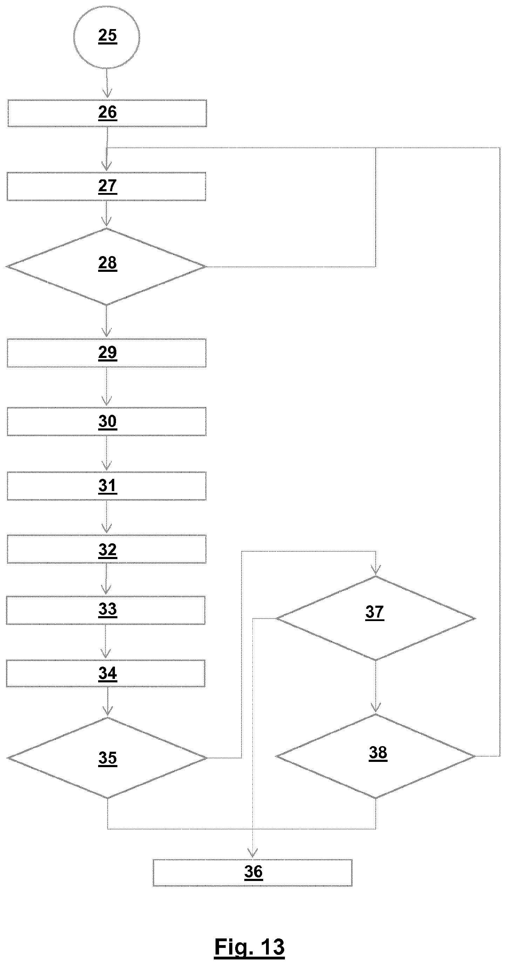

**Fig. 13** zeigt stark schematisiert einen Ablauf eines erfindungsgemäßen Verfahrens. Das Verfahren zur Ermittlung einer Produkttemperatur wird während des gesamten Trocknungsprozesses immer wieder nach fest vorgegebenen gleichen oder variablen Zeitspannen oder auch in Abhängigkeit von der Prozesssteuerung in einem Verfahrensschritt 25 durch die in einer elektronischen Steuereinheit ablaufende Prozesssteuerung gestartet.

Der Start des Verfahrens löst eine Schließung des Verschlusselements, insbesondere des Zwischenventils, in einem Verfahrensschritt 26 durch einen Antrieb des Verschlusselements aus.

Hieran anschließend wird in einem Verfahrensschritt 27 ein Druckwert $P_0$ ($P_1$, $P_2$, ...) gemessen. In einem Verfahrensschritt 28 erfolgt die Prüfung, ob eine genügende Anzahl N von Druckwerten $P_0$, $P_1$, ... $P_N$ vorliegt, auf Grundlage welcher sinnvoll ein Versuch einer Identifikation von Parametern erfolgen kann. Hierzu muss dafür Sorge getragen werden, dass zumindest auch Druckwerte vorliegen, welche bereits in dem Anstiegsbereich 4 des Druckverlaufs 3 liegen. Beispielsweise kann die Entscheidung, ob die vorliegenden Druckwerte ausreichend sind, davon abhängig gemacht werden, dass für eine vorgegebene Zeitspanne nach dem Verfahrensschritt 26 mit der Schließung des Verschlusselements Druckwerte aufgenommen worden sind oder eine vorbestimmte Anzahl *N* von Druckwerten aufgenommen worden ist. Ebenfalls möglich ist, dass für die Prüfung, ob eine hinreichende Anzahl von Druckwerten aufgenommen worden ist, geprüft wird, ob ein gemessener Druckwert um einen absoluten oder relativen Betrag oberhalb des Drucks $P_0$ in der Trocknungskammer vor der Schließung des Verschlusselements liegt.

Ergibt in dem Verfahrensschritt 28 die Prüfung, dass noch keine hinreichenden Druckwerte vorliegen für eine sinnvolle Identifikation von Parametern, verzweigt das Verfahren zurück zum Verfahrensschritt 27, so dass nach einem fest vorgegebenen Zeitintervall eine erneute Messung eines Druckwerts erfolgt.

Ergibt hingegen die Prüfung in dem Verfahrensschritt 28, dass Druckwerte vorliegen, für welche aller Voraussicht nach eine sinnvolle Identifikation von Parametern möglich ist, erfolgt zunächst in einem Verfahrensschritt 29 wie zuvor erläutert eine Ermittlung eines Anfangszeitpunkts $t_{init}$, ab welchem Druckwerte berücksichtigt werden sollen, ohne dass eine übermäßige Beeinflussung durch Übergangseffekte erfolgt. Im Rahmen des Verfahrensschritts 29 erfolgt somit auch die lineare Regression für die Ermittlung der Parameter, insbesondere einer Steigung, der Anstiegsgeraden 14.

In einem anschließenden Verfahrensschritt 30 wird, ebenfalls über eine lineare Regression, wie erläutert, aus den letzten gemessenen Druckwerten die Auslaufgerade 13 ermittelt, womit der Parameter X identifiziert wird.

In einem Verfahrensschritt 31 kann dann, wie ebenfalls erläutert, über den Schnittpunkt der Auslaufgeraden 13 mit der Anstiegsgeraden 14 ein Startwert für $P_{ice}$ ermittelt werden.

Entsprechend kann in einem Verfahrensschritt 32 ein Startwert für $R_p$ ermittelt werden. In dem Verfahrensschritt 32 wird der Startwert für $R_p$ vorzugsweise über die Gleichung (4) berechnet.

Mit den in den Verfahrensschritten 31, 32 ermittelten Startwerten für $P_{ice}$ und $R_p$ kann dann in einem Verfahrensschritt 33 die nichtlineare Regression durchgeführt werden, mittels welcher insbesondere der Druck an der Sublimationsfront ermittelt wird. Während der nichtlinearen Regression gemäß dem Verfahrensschritt 33 wird vorzugsweise ein Levenberg-Marquardt-Algorithmus verwendet. Ergebnis der Verwendung dieses Algorithmus kann auch eine Information sein, ob ein zuverlässiges Ergebnis gefunden wurde und wie dieses Ergebnis zu werten ist.

In einem Verfahrensschritt 34 wird dann aus dem ermittelten Druck an der Sublimationsfront die Produkttemperatur 12 ermittelt. U. U erfolgt in dem Verfahrensschritt 34 eine Bestimmung der Produkttemperatur nur dann, wenn Ergebnis der Anwendung des Levenberg-Marquardt-Algorithmus in dem Verfahrensschritt 33 war, dass ein gültiges Ergebnis der Identifikation vorliegt.

In dem Verfahrensschritt 34 kann bspw. eine Ermittlung der Produkttemperatur unter Verwendung der Dampfdruckkurve gemäß den Formeln, wie diese in

- Buck, A. L. (1981). New equations for computing vapor pressure and enhancement factor. National Center for Atmospheric Research;

- Buck, A. L. (1996). Buck Research Manual (updated equation). National Center for Atmospheric Research

durch

$$e_w = 6{,}1121 \, e^{\frac{17{,}502 \, t}{240{,}97+t}}$$

mit

t in [°C] und

$e_w$ in [hPa].

beschrieben ist, erfolgen.

In einem Verfahrensschritt 35 erfolgt eine Bewertung der identifizierten Parameter. Hierbei kann beispielsweise das Vorliegen eines Konvergenzkriteriums geprüft werden, anhand dessen entschieden werden kann, ob die ermittelte Produkttemperatur hinreichend konvergiert.

Ist dies der Fall, erfolgt in einem Verfahrensschritt 36 eine Öffnung des Verschlusselements.

Bei einem negativen Ergebnis der Prüfung in dem Verfahrensschritt 35 erfolgt hingegen in einem Verfahrensschritt 37 eine Prüfung, ob die in dem Verfahrensschritt 34 ermittelte Temperatur eine maximale Temperatur überschritten hat.

Ist dies der Fall, wird das Verfahren abgebrochen und in dem Verfahrensschritt 36 das Zwischenventil geöffnet. Andernfalls oder alternativ zu dem Verfahrensschritt 37 kann in einem Verfahrensschritt 38 geprüft werden, ob ohne Konvergenz der identifizierten Produkttemperatur eine maximale Schließungsdauer des Verschlusselements überschritten ist.

Ist dies der Fall, erfolgt ein Abbruch des Verfahrens und in einem Verfahrensschritt 36 die Öffnung des Verschlusselements. Andernfalls verzweigt das Verfahren wieder zurück zu dem Verfahrensschritt 27 mit der erneuten Messung eines Druckwerts nach einem vorbestimmten Zeitintervall und dem Durchlaufen der folgenden Verfahrensschritte, womit dann immer mehr Druckwerte vorliegen und eine zunehmende Konvergenz der mittels der nichtlinearen Regression identifizierten Parameter herbeigeführt werden kann.

Für eine erfolgreiche Durchführung der hier erläuterten linearen und nichtlinearen Regression ist eine Mindestmenge an Druckwerten erforderlich. Die Mindestzahl der Druckwerte kann u. U. bei dem Verfahren eingestellt werden. Beispielsweise wird eine Mindestzahl von mindestens 10 Druckwerten gewählt. Für die nichtlineare Regression ist weniger die Anzahl der Druckwerte entscheidend als dass die zugrunde gelegten Druckwerte signifikante Bereiche des Druckverlaufes 3, nämlich einen Teil des Anstiegsbereichs 4, einen Teil des Übergangsbereichs 5 und einen Teil des Auslaufbereichs 6, erfassen. Auch hier kann beispielsweise ein Aufzeichnungsintervall von 50 bis 200 ms mit mindestens zehn Druckwerten sinnvoll sein. Für die Ermittlung des Auslaufbereichs können beispielsweise die letzten 10 % der Druckwerte herangezogen werden. Möglich ist somit, dass hierfür mit zunehmender Messdauer eine größere Anzahl von Druckwerten berücksichtigt wird.

Für den Fall, dass die letzte nichtlineare Regressionsanalyse nicht auf ein gültiges Ergebnis geführt hat, kann dieses einerseits in einer Prozesssteuerung dokumentiert werden. Andererseits ist möglich, dass nach dem Abbruch der Identifikation und kurzzeitiger Wiederöffnung des Verschlusselements eine erneute Schließung des Verschlusselements mit einer Wiederholung der Messung und der Identifikation erfolgt. Möglich ist auch, dass mittels eines Zählers die Anzahl der nichtlinearen Regressionsanalysen mit einem gültigen Ergebnis gezählt wird.

Möglich ist auch, dass geprüft wird, ob es zuvor bereits schon erfolgreiche lineare Regressionen gab und ob auf dieser Grundlage Produkttemperaturen ermittelt wurden. Führt die Prüfung zu dem Ergebnis, dass weniger als eine vorbestimmte Anzahl gültiger Ergebnisse vorliegt, kann eine Wiederholung der Messung erfolgen.

Als Schwellwert für eine Konvergenz der identifizierten Produkttemperaturen kann beispielsweise das Kriterium verwendet werden, ob für die letzten fünf Druckwerte die identifizierte Produkttemperatur innerhalb eines vorbestimmten Schwankungsbereichs, beispielsweise von ± 1 K oder ± 0,5 K, liegt. Ist dieses nicht der Fall, erfolgt keine Öffnung des Verschlusselements, sondern die erneute Messung nach dem vorgegebenen Zeitintervall.

Als Abbruchkriterium vor der Identifikation einer hinreichend konvergierenden Produkttemperatur kann auch verwendet werden, dass der Druck in der Trocknungskammer einen vorbestimmten Druckwert über- und/oder unterschreitet.

Hinsichtlich der Ausgestaltung des Gefriertrockners, insbesondere mit den Trocknungsgefäßen oder Vials, den Stellflächen, der Temperierung der Stellflächen, der Trocknungskammer, einem Zwischenventil, einer Eiskammer und den Einrichtungen sowie den Verfahren zur grundsätzlichen Prozesssteuerung wird beispielhaft auf die Patentanmeldungen EP 2 488 808, DE 10 2006 019 641, EP 2 773 913, die nicht vorveröffentlichte Anmeldung EP 3 093 597 der Anmelderin sowie die auf der Website www.martinchrist.de der Anmelderin dargestellten Gefriertrockner und Komponenten derselben sowie in diesen eingesetzten Verfahren verwiesen, welche diesbezüglich zum Gegenstand der vorliegenden Anmeldung gemacht werden.

Vorzugsweise ist die Zeitspanne der Schließung des Verschlusselements auf weniger als 15 sec, insbesondere weniger als 12 sec oder weniger als 10 sec, begrenzt.

In der vorliegenden Beschreibung wird teilweise auf die Verwendung von Wasser als Lösungsmittel in dem Trocknungsgut Bezug genommen. Entsprechend kann eine Verwendung des erfindungsgemäßen Verfahrens auch für ein anderes in dem Trocknungsprodukt eingesetztes Lösungsmittel erfolgen, wobei dann dem anderen Lösungsmittel zugeordnete physikalische Parameter zu verwenden sind.

Im Rahmen der Erfindung ist mit der Schließung des Verschlusselements die Trocknungskammer geschlossen. Findet in dem Gefriertrockner eine Vakuumpumpe Einsatz, ist diese vorzugsweise an eine separat von der Trocknungskammer ausgebildete Eiskammer, angeschlossen und durch die Schließung des Verschlusselements von der Trocknungskammer getrennt. Andernfalls muss über ein zusätzliches Ventil (oder die konstruktive Ausgestaltung der Vakuumpumpe) dafür Sorge getragen werden, dass die Trocknungskammer mit Schließung des Verschlusselements vollständig geschlossen ist.

## BEZUGSZEICHENLISTE

| | |
|---|---|
| 1 | Druck $P$ |
| 2 | Zeit $t$ |
| 3 | Druckverlauf |
| 4 | Anstiegsbereich |
| 5 | Übergangsbereich |
| 6 | Auslaufbereich |
| 7 | Druckverlaufanteil Sublimationseffekt |
| 8 | Druckverlaufanteil Erwärmungseffekt |
| 9 | Druckverlaufanteil Stellflächeneffekt und Leckageeffekt |
| 10 | approximierter Druckverlauf |
| 11 | Temperaturverlauf |
| 12 | Produkttemperatur |
| 13 | Auslaufgerade |
| 14 | Anstiegsgerade |
| 15 | Übergangsbereich |
| 16 | $R_p$ |
| 17 | $L_{dry}$ |
| 18 | Bereich |
| 19 | Näherungsgerade |
| 20 | zeitlicher Versatz |
| 21 | Haupttrocknungsbereich |
| 22 | Nachtrocknungsbereich |
| 23 | Temperaturverlauf Sensor |
| 24 | Temperaturverlauf Stellfläche |
| 25 | Verfahrensschritt: Start |
| 26 | Verfahrensschritt: Schließung des Verschlusselements |
| 27 | Verfahrensschritt: Messung eines Druckwerts |
| 28 | Verfahrensschritt: Prüfung: genügende Anzahl von Druckwerten? |
| 29 | Verfahrensschritt: Ermittlung eines Anfangszeitpunkts |
| 30 | Verfahrensschritt: Ermittlung einer Auslaufgeraden |
| 31 | Verfahrensschritt: Ermittlung Schnittpunkt Auslaufgerade - Anstiegsgerade -> $P_{ice}$ |
| 32 | Verfahrensschritt: Ermittlung Startwert $R_p$ |
| 33 | Verfahrensschritt: Ermittlung des Drucks an der Sublimationsfront |
| 34 | Verfahrensschritt: Ermittlung der Produkttemperatur |
| 35 | Verfahrensschritt: Bewertung des ermittelten Parameters |
| 36 | Verfahrensschritt: Öffnung des Verschlusselements |
| 37 | Verfahrensschritt: Prüfung: überschreitet die Produkttemperatur eine maximale Temperatur? |
| 38 | Verfahrensschritt: Prüfung: ist eine maximale Schließungsdauer überschritten? |
| 39 | Steigung |

**Patentansprüche**

1. Verfahren zur druckbasierten Ermittlung eines Produktparameters in einem Gefriertrockner mit den folgenden Verfahrensschritten:

   a) Schließung eines zwischen einer Eiskammer und einer Trocknungskammer angeordneten Verschlusselements zu einem Zeitpunkt $t_{START}$ und für eine Zeitspanne zwischen dem Zeitpunkt $t_{START}$ und einem Zeitpunkt $t_{ENDE}$,
   b) Messung von Druckwerten ($P_1$, $P_2$, ...) in der Trocknungskammer während der Zeitspanne zwischen dem Zeitpunkt $t_{START}$ und dem Zeitpunkt $t_{ENDE}$,
   c) Ermittlung einer Näherung des Produktparameters aus den während der Zeitspanne zwischen dem Zeitpunkt $t_{START}$ und dem Zeitpunkt $t_{ENDE}$ gemessenen Druckwerten ($P_1$, $P_2$, ...) und
   d) Öffnung des Verschlusselements zu dem Zeitpunkt $t_{ENDE}$,
   **dadurch gekennzeichnet, dass**
   e) der Zeitpunkt $t_{ENDE}$ und die Näherung des Produktparameters, welcher für die Ermittlung des Zeitpunkts $t_{ENDE}$ berücksichtigt wird, spezifisch für die während der Zeitspanne zwischen dem Zeitpunkt $t_{START}$ und einem Zeitpunkt $t_{ENDE}$ aufgenommenen Druckwerte ($P$, $P_2$, ...) ermittelt wird.

2. Verfahren nach Anspruch 1, **dadurch gekennzeichnet, dass** zwischen dem Zeitpunkt $t_{START}$ und Zeitpunkt $t_{ENDE}$ sukzessive eine Ermittlung mehrerer Näherungen des Produktparameters erfolgt.

3. Verfahren nach Anspruch 2, **dadurch gekennzeichnet, dass** für die sukzessive ermittelten Näherungen des Produktparameters eine sich vergrößernde Anzahl von Druckwerten ($P_1$, $P_2$, ... $P_M$; $P_1$, $P_2$, ... $P_{M+1}$; $P_1$, $P_2$, ... $P_{M+2}$;...) ausgewertet wird.

4. Verfahren nach Anspruch 2 oder 3, **dadurch gekennzeichnet, dass** der Zeitpunkt $t_{ENDE}$ so ermittelt wird, dass eine Öffnung des Verschlusselements erfolgt, wenn eine ermittelte Näherung des Produktparameters einen Schwellwert über- und/oder unterschreitet.

5. Verfahren nach einem der Ansprüche 2 bis 4, **dadurch gekennzeichnet, dass** der Zeitpunkt $t_{ENDE}$ so ermittelt wird, dass eine Öffnung des Verschlusselements erfolgt, wenn ermittelte Näherungen des Produktparameters ein Konvergenzkriterium erfüllen.

6. Verfahren nach einem der Ansprüche 2 bis 5, **dadurch gekennzeichnet, dass** der Zeitpunkt $t_{ENDE}$ so ermittelt wird, dass eine Öffnung des Verschlusselements erfolgt, wenn eine vorgegebene maximale Zeitspanne zwischen dem Zeitpunkt $t_{START}$ und dem Zeitpunkt $t_{ENDE}$ überschritten ist.

7. Verfahren nach einem der vorhergehenden Ansprüche, **dadurch gekennzeichnet, dass**

   a) ein Zeitpunkt $t_i$ ermittelt wird, zu welchem ein gemessener Druckwert $P_i$ zum ersten Mal einen absoluten oder relativen Wert oberhalb eines zuvor gemessenen Druckwerts $P_0$ liegt,
   b) mit Druckwerten $P_i$, $P_{i+1}$, ... eine Näherung einer Anstiegsgeraden des Druckverlaufs über der Zeit ermittelt wird,
   c) unter Verwendung der ermittelten Näherung der Anstiegsgeraden ermittelt wird, zu welchem Zeitpunkt $t_{INIT}$ die Anstiegsgerade den Druckwert $P_0$ erreicht und
   d) für die folgende Auswertung für die Ermittlung der Näherung des Produktparameters

      da) nur gemessene Druckwerte verwendet werden, welche bei oder nach dem Zeitpunkt $t_{INIT}$ gemessen wurden, und/oder
      db) mindestens ein extrapolierter Druckwert verwendet wird, welcher aus der ermittelten Anstiegsgeraden bei und/oder oder nach dem Zeitpunkt $t_{INIT}$ ermittelt wird.

8. Verfahren nach einem der vorhergehenden Ansprüche, **dadurch gekennzeichnet, dass** aus am Anfang nach der Schließung des Verschlusselements oder nach dem Zeitpunkt $t_{INIT}$ gemessenen Druckwerten ($P_{INIT}$, $P_{INIT+1}$, ...) eine lineare Anstiegsgerade ermittelt wird.

9. Verfahren nach einem der vorhergehenden Ansprüche, **dadurch gekennzeichnet, dass** aus zuletzt gemessenen Druckwerten ($P_{ENDE}$, $P_{ENDE-1}$, ...) eine lineare Auslaufgerade ermittelt wird.

**10.** Verfahren nach Anspruch 8 und Anspruch 9, **dadurch gekennzeichnet, dass** eine nichtlineare Regression zur Ermittlung

a) eines Sublimationsdrucks von Eis ($P_{ice}$) und
b) eines flächennormalisierten Widerstands des trockenen Produkts gegen Dampftransport ($R_p$)

durchgeführt wird, wobei bei der nichtlinearen Regression

- der Startwert für den Sublimationsdruck von Eis ($P_{ice,Start}$) aus der lineare Auslaufgeraden und der linearen Anstiegsgeraden ermittelt wird und/oder
- der Startwert für den flächennormalisierten Widerstand des trockenen Produkts gegen Dampftransport ($R_{p,Start}$) über $R_{p,Start} = a\,L_{dry} + b$ ermittelt wird, wobei $L_{dry}$ die Dicke des getrockneten Produktes ist und mit Null angesetzt ist oder aus den Sublimationsraten vorangegangener Messungen bestimmt wird.

**11.** Verfahren nach Anspruch 10, **dadurch gekennzeichnet, dass** für die nichtlineare Regression ein Levenberg-Marquardt-Algorithmus verwendet wird.

**12.** Gefriertrockner mit einer elektronischen Steuereinheit, welche Steuerlogik zur Durchführung eines Verfahrens nach einem der vorhergehenden Ansprüche aufweist.

**13.** Softwareprodukt mit Steuerlogik zur Durchführung eines Verfahrens nach einem der Ansprüche 1 bis 11.

**Claims**

**1.** Method for the pressure-based determination of a product parameter in a freeze dryer comprising the following methods steps:

a) closure of a closing element arranged between an ice chamber and a drying chamber at a point in time $t_{START}$ and for a time span between the point in time $t_{START}$ and a point in time $t_{ENDE}$,
b) measuring of pressure values ($P_1$, $P_2$, ...) in the drying chamber during the time span between the point in time $t_{START}$ and the point in time $t_{ENDE}$,
c) determination of an approximation of the product parameter from the pressure values ($P_1$, $P_2$, ...) measured during the time span between the point in time $t_{START}$ and the point in time $t_{ENDE}$ and
d) opening of the closing element at the point in time $t_{ENDE}$,
**characterized in that**
e) the point in time $t_{ENDE}$ and the approximation of the product parameter which is considered for the determination of the point in time $t_{ENDE}$ are determined specifically for the pressure values ($P$, $P_2$, ...) measured during the time span between the point in time $T_{START}$. and a point in time $t_{ENDE}$.

**2.** Method of claim 1, **characterized in that** a plurality of approximations of the product parameter is successively determined between the point in time $t_{START}$ and the point in time $t_{ENDE}$.

**3.** Method of claim 2, **characterized in that** for the successively determined approximations of the product parameter an increasing number of pressure values ($P_1$, $P_2$, ... $P_M$; $P_1$, $P_2$, ... $P_{M+1}$; $P_1$, $P_2$, ... $P_{M+2}$;...) is considered.

**4.** Method of claim 2 or 3, **characterized in that** the point in time $t_{ENDE}$ is determined such that the closing element is opened when a determined approximation of the product parameter exceeds and/or falls below a threshold.

**5.** Method of one of claims 2 to 4, **characterized in that** the point in time $t_{ENDE}$ is determined such that the closing element is opened when the determined approximations of the product parameter fulfil a convergence criterion.

**6.** Method of one of claims 2 to 5, **characterized in that** the point in time $t_{ENDE}$ is determined such that the closing element is opened when a given maximum time span between the point in time $t_{START}$ and the point in time $t_{ENDE}$ has lapsed.

**7.** Method of one of the preceding claims, **characterized in that**

a) a point in time $t_i$ is determined at which a measured pressure value $P_i$ for the first time exceeds an absolute or relative value above a previously measured pressure value $P_0$,

b) with pressure values $P_i$, $P_{i+1}$, ... an approximation of a rising straight line of the pressure curve over time is determined,

c) by use of the determined approximation of the rising straight line it is determined at which point in time $t_{INIT}$ the rising straight line reaches the pressure value $P_0$ and

d) for the subsequent analysis for the determination of the approximation of the product parameter

da) only measured pressure values are used which have been measured at or after the point in time $t_{INIT}$ and/or

db) at least one extrapolated pressure value is used which is determined from the determined rising straight line at and/or after the point in time $t_{INIT}$.

8. Method of one of the preceding claims, **characterized in that** a linear rising straight line is determined from pressure values ($P_{INIT}$, $P_{INIT+1}$, ...) measured at the beginning after the closure of the closing element or after the point in time $t_{INIT}$.

9. Method of one of the preceding claims, **characterized in that** a linear coasting line is determined from the last measured pressure values ($P_{ENDE}$, $P_{ENDE-1}$, ...).

10. Method of claim 8 and 9, **characterized in that** a nonlinear regression is performed for determining

a) a sublimation pressure of ice ($P_{ice}$) and

b) an area-normalized resistance of the dried product against transportation of vapor ($R_p$) is performed, whereby means of the nonlinear regression

- the starting value for the sublimation pressure of ice ($P_{ice,Start}$) is determined from the linear coasting line and the linear rising straight line and/or

- the starting value for the area-normalized resistance of the dried product against transportation of vapor ($R_{p,Start}$) is determined by $R_{p,Start} = a\, L_{dry} + b$, where $L_{dry}$ is the thickness of the dried product and set to zero or determined from the sublimation rates of previous measurements.

11. Method of claim 10, **characterized in that** the nonlinear regression uses a Levenberg-Marquardt-Algorithms.

12. Freeze dryer with an electronic control unit comprising control logic for executing a method of one of the preceding claims.

13. Software product comprising control logic for executing a method of one of claims 1 to 11.

**Revendications**

1. Procédé de détermination, sur la base d'une pression, d'un paramètre de produit dans un lyophilisateur, avec les étapes suivantes :

a) fermeture d'un élément de fermeture disposé entre une chambre de gel et une chambre de séchage à un moment $t_{START}$, et pour un laps de temps entre le moment $T_{START}$ et le moment $t_{ENDE}$,

b) mesure de valeurs de pression ($P_1$, $P_2$...) dans la chambre de séchage, pendant le laps de temps entre le moment $T_{START}$ et le moment $T_{ENDE}$,

c) détermination d'une approximation du paramètre de produit à partir des valeurs de pression ($P_1$, $P_2$...) mesurées pendant le laps de temps entre le moment $T_{START}$ et le moment $t_{ENDE}$ et

d) ouverture de l'élément de fermeture à un moment $t_{ENDE}$,

**caractérisé en ce que**

e) le moment $t_{ENDE}$ et l'approximation du paramètre de produit pris en compte pour déterminer le moment $T_{ENDE}$ sont déterminés spécifiquement pour les valeurs de pression ($P$, $P_2$,...) prises pendant le laps de temps entre le moment $T_{START}$ et le moment $t_{ENDE}$.

2. Procédé selon la revendication 1, **caractérisé en ce que** plusieurs approximations du paramètre produit sont déterminées successivement entre le moment $t_{START}$ et le moment $t_{ENDE}$.

3. Procédé selon la revendication 2, **caractérisé en ce que** pour les approximations déterminées successives du paramètre de produit, un nombre croissant de valeurs de pression ($P_1, P_2 ... P_M$; $P_1, P_2 ... P_{M+1}$; $P_1, P_2 ... P_{M+2}$; ...) sont analysées.

4. Procédé selon la revendication 2 ou 3, **caractérisé en ce que** le moment $t_{ENDE}$ est déterminé de façon à ce qu'une ouverture de l'élément de fermeture ait lieu lorsqu'une approximation déterminée du paramètre de produit dépasse ou passe en dessous d'une valeur seuil.

5. Procédé selon l'une des revendications 2 à 4, **caractérisé en ce que** le moment $t_{ENDE}$ est déterminé de façon à ce qu'une ouverture de l'élément de fermeture ait lieu lorsque les approximations du paramètre produit déterminé répondent à un critère de convergence.

6. Procédé selon l'une des revendications 2 à 5, **caractérisé en ce que** le moment $t_{ENDE}$ est déterminé de façon à ce qu'une ouverture de l'élément de fermeture ait lieu lorsqu'un laps de temps maximal prédéterminé entre le moment $T_{START}$ et le moment $t_{ENDE}$ est dépassé.

7. Procédé selon l'une des revendications précédentes, **caractérisé en ce que**

    a) un moment $t_i$ est déterminé, auquel une valeur de pression $P_i$ mesurée présent pour la première fois une valeur absolue ou relative au-dessus d'une valeur $P_0$ précédemment mesurée,
    b) avec les valeurs de pression $P_i$, $P_{i+1}$... une approximation d'une droite d'augmentation du tracé de la pression par rapport au temps est déterminée,
    c) à l'aide de l'approximation déterminée des droites d'augmentation, il est déterminé à quel moment $t_{INIT}$ la droite d'augmentation atteint la valeur de pression $P_0$ et
    d) pour l'analyse suivante, pour la détermination de l'approximation du paramètre de produit

        da) seules sont utilisées les valeurs de pression mesurées qui ont été mesurées au moment ou après le moment $t_{INIT}$ et/ou
        db) au moins une valeur de pression extrapolée est utilisée, qui est déterminé à partir des droites d'augmentation au moment et/ou après le moment $t_{INIT}$.

8. Procédé selon l'une des revendications précédentes, **caractérisé en ce que**, à partir des valeurs de pression ($P_{INIT}$, $P_{INIT+1}$...) mesurées au début après la fermeture de l'élément de fermeture ou après le moment $t_{INIT}$, est déterminée une droite d'augmentation linéaire.

9. Procédé selon l'une des revendications précédentes, **caractérisé en ce que**, à partir des dernières valeurs de pression mesurées ($P_{ENDE}$, $P_{ENDE-1}$...), est déterminée une droite de sortie linéaire.

10. Procédé selon la revendication 8 et la revendication 9, **caractérisé en ce qu'**un régression non linéaire est effectuée pour la détermination

    a) d'une pression de sublimation de la glace ($P_{ice}$) et
    b) d'une résistance normalisée sur la surface du produit séché par rapport au transport de la vapeur ($R_p$)

moyennant quoi, lors de la régression non linéaire,

    - la valeur de départ pour la pression de sublimation de la glace ($P_{ice, Start}$) est déterminée à partir de la droite de sortie linéaire et de la droite d'augmentation linéaire et/ou
    - la valeur de départ résistance normalisée sur la surface du produit séché par rapport au transport de la vapeur ($R_{p, Start}$) est déterminée à l'aide de $R_{p, Start} = a\, L_{dry} + b$, $L_{dry}$ étant l'épaisseur du produit séché et étant réglé à zéro ou est déterminée à partir des taux de sublimation des mesures précédentes.

11. Procédé selon la revendication 10, **caractérisé en ce que**, pour la régression non linéaire, un algorithme de Levenberg-Marquardt est utilisé.

12. Lyophilisateur avec une unité de commande électronique, qui comprend une logique de commande pour l'exécution d'un procédé selon l'une des revendications précédentes.

13. Produit logiciel avec logique de commande pour l'exécution d'un procédé selon l'une des revendications 1 à 11.

**Fig. 1**

**Fig. 2**

Fig. 3

Fig. 4

EP 3 473 959 B1

**Fig. 5**

**Fig. 6**

EP 3 473 959 B1

**Fig. 7**

EP 3 473 959 B1

**Fig. 8**

**Fig. 9**

EP 3 473 959 B1

**Fig. 10**

EP 3 473 959 B1

EP 3 473 959 B1

**Fig. 11**

Fig. 12

**Fig. 13**

39

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1038988 B
- EP 2156124 B1
- EP 1903291 A1
- US 6971187 B1
- US 20080172902 A1
- EP 2488808 A
- DE 102006019641
- EP 2773913 A
- EP 3093597 A

**In der Beschreibung aufgeführte Nicht-Patentliteratur**

- **MILTON, N. et al.** Evaluation of manometric temperature measurement as a method of monitoring product temperature during lyophilization. *PDA Journal of Pharmaceutical Science and Technology,* 1997, vol. 51 (1), 7-16
- **TANG, X.L. ; S.L. NAIL ; M.J. PIKAL.** Evaluation of manometric temperature measurement, a process analytical technology tool for freeze-drying: Part I, product temperature measurement. *Aaps Pharmscitech,* 2006, vol. 7 (1
- **PIKAL, M.J. ; X. TANG ; S.L. NAIL.** Automated process control using manometric temperature measurement. University of Connecticut; Purdue Research Foundation, 2005
- **TANG, X.L.C. ; S.L. NAIL ; M.J. PIKAL.** Evaluation of manometric temperature measurement, a process analytical technology tool for freeze-drying: Part II Measurement of dry-layer resistance. *Aaps Pharmscitech,* 2006, vol. 7 (4
- **TANG, X.L.C. ; S.L. NAIL ; M.J. PIKAL.** Evaluation of manometric temperature measurement (MTM), a process analytical technology tool in freeze drying, Part III: Heat and mass transfer measurement. *Aaps Pharmscitech,* 2006, vol. 7 (4
- **GIESELER, H. ; T. KRAMER ; M.J. PIKAL.** Use of manometric temperature measurement (MTM) and SMART (TM) freeze dryer technology for development of an optimized freeze-drying cycle. *Journal of Pharmaceutical Sciences,* 2007, vol. 96 (12), 3402-3418
- **VELARDI, S.A. ; A.A. BARRESI.** *Method and system for controlling a freeze drying process,* 2008
- **TANG, X.L. ; S.L. NAIL ; M.J. PIKAL.** Freeze-drying process design by manometric temperature measurement: Design of a smart freeze-dryer. *Pharmaceutical Research,* 2005, vol. 22 (4), 685-700
- **MILTON, N. ; PIKAL, M. J. ; ROY, M. L. et al.** Evaluation of Manometric Temperature Measurement as a method of Monitoring Product Temperature During Lyophilization. *PDA J. Pharma. Sci and Tech.,* 1997, vol. 51, 7-16
- **NACH TANG, X. ; STEVEN, L. ; PIKAL, M.** Evaluation of Manometric Temperature Measurement, a Process Analytical. *AAPS PharmaSciTech,* 2006
- **BUCK, A. L.** New equations for computing vapor pressure and enhancement factor. *National Center for Atmospheric Research,* 1981
- **BUCK, A. L.** Buck Research Manual (updated equation). *National Center for Atmospheric Research,* 1996